(19) Europäisches Patentamt
European Patent Office
Office européen des brevets

(11) EP 2 167 443 B1

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **08736606.8**

(22) Anmeldetag: **28.04.2008**

(51) Int Cl.:
*C04B 24/16* (2006.01) *C04B 24/26* (2006.01)
*C04B 28/02* (2006.01) *C04B 40/06* (2006.01)
*C08F 220/56* (2006.01) *C04B 103/46* (2006.01)

(86) Internationale Anmeldenummer:
**PCT/EP2008/055138**

(87) Internationale Veröffentlichungsnummer:
**WO 2008/151878 (18.12.2008 Gazette 2008/51)**

# (54) POLYMERVERGÜTETE BAUSTOFFTROCKENMISCHUNGEN

POLYMER-TEMPERED DRY CONSTRUCTION MATERIAL MIXTURES

MÉLANGES SECS DE MATÉRIAUX DE CONSTRUCTION TREMPÉS ET REVENUS PAR POLYMÈRES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.06.2007 DE 102007027470**

(43) Veröffentlichungstag der Anmeldung:
**31.03.2010 Patentblatt 2010/13**

(73) Patentinhaber: **Construction Research & Technology GmbH**
**83308 Trostberg (DE)**

(72) Erfinder:
- **GAEBERLEIN, Peter**
  **39104 Magdeburg (DE)**
- **SCHINABECK, Michael**
  **83352 Altenmarkt (DE)**
- **HERTH, Gregor**
  **83308 Trostberg (DE)**
- **FRIEDRICH, Stefan**
  **84518 Garching (DE)**
- **STOHR, Werner**
  **86161 Augsburg (DE)**
- **EHLE, Alexander**
  **86916 Kaufering (DE)**
- **KRATZER, Kornelia**
  **86637 Prettelshofen (DE)**
- **STREICHER, Markus**
  **86316 Friedberg (DE)**
- **SCHWARZ, Volker**
  **86179 Augsburg (DE)**
- **KRAMER, Astrid**
  **86438 Kissing (DE)**

(74) Vertreter: **BASF IP Association**
**BASF SE**
**ZRX-C6**
**67056 Ludwigshafen (DE)**

(56) Entgegenhaltungen:
**EP-A- 0 936 228** **EP-A- 1 059 316**
**EP-A- 1 726 432** **EP-A2- 1 686 103**
**WO-A-02/10229** **WO-A-03/085013**
**WO-A-2005/035603** **WO-A-2005/090424**
**WO-A-2006/002936** **WO-A-2007/017286**
**DE-A1-102004 032 399** **DE-A1-102005 057 507**
**DE-A1-102006 007 004** **US-A- 5 075 399**
**US-A1- 2006 130 708**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 167 443 B1

## Beschreibung

Die vorliegende Erfindung betrifft auf Zement basierende Trockenmischungen und deren Verwendung.

In "R. Bayer, H. Lutz, Dry Mortars, Ullmann's Encyclopedia of Industrial Chemistry, 6th ed., vol. 11, Wiley-VCH, Weinheim, (2003), 83-108" wird ein Überblick über die Anwendungen und Zusammensetzung von Trockenmörteln, wie Binder, Aggregate und verschiedene Zusätze gegeben. Insbesondere sind durch Zusätze wie redispergierbare Polymerpulver und/oder Celluloseether, polymervergütete zementäre Trockenmischungen gebräuchlich, allerdings sind diese Zusätze insbesondere die redispergierbaren Polymerpulver sehr kostenintensiv. Der Einsatz von Superabsorbern in Baustoffmischungen ist ebenfalls bekannt. Zum Beispiel wird in der US-A-2003144386 der Einsatz von Superabsorbern in zementären Baustoffmischungen zur Verbesserung der Festigkeitsentwicklung beschrieben. Die Wasseraufnahmekapazität bzw. Wasserrückhaltekapazität der in dieser Schrift offenbarten Superabsorber in calciumhaltigen Systemen, zum Beispiel in zementösen Systemen ist allerdings relativ gering. In der US-B-6187887 sind wasserlösliche oder wasserquellbare sulfogruppenhaltige Copolymere beschrieben, welche zur Steigerung der Wasserretention in Baustoffsystemen eingesetzt werden. Diese Copolymere unterscheiden sich durch ihre Wasserlöslichkeit von den im Wesentlichen unlöslichen Superabsorbern und durch die fehlende, bzw. sehr geringe Wasseraufnahmekapazität.

Die WO 2007/017286 offenbart Additive für bauchemische Anwendungen bestehend aus einer organischen und/oder anorganischen Kernkomponente a) mit rheologieerhöhenden Eigenschaften und einer auf diese aufgrund physikalischer und/oder chemischer Wechselwirkungen aufgebrachten und als Coating fungierenden Schalen-Komponente b). In den Beispielen wird eine Fliesenkleber-Rezeptur bestehend aus 36,60 Gew.-% Portlandzement, 47,24 Gew.-% Quarzsand, 3 Gew.-% VAE-Dispersionspulver, 0,60 Gew.-% Wasserretentionsmittel in Form von Celluloseether und 0,60 Gew.-% Beschleuniger in Form von Calciumformiat offenbart. Diese Mischung enthält weiterhin 0,04 Gew.-% beschichtetes Polyacrylamid. Alternativ zu Polyacrylamid offenbart die WO 2007/017286 darüber hinaus sulfogruppenhaltige Copolymere, welche ca. 0,1 Mol-% eines Vernetzermonomers umfassen. Die Menge des Vernetzermonomers wird hierbei so gewählt, dass das sulfogruppenhaltige Copolymer wasserlöslich ist.

Die EP 1686103 offenbart hydraulisch abbindende Mörtelzusammensetzungen enthaltend mindestens eine hydraulisch abbindende Komponente, mindestens einen Leichtfüllstoff, mindestens einen Celluloseether, mindestens einen Abbindeverzögerer sowie ggf. weitere zusätzliche Additive. Im Speziellen wird eine Mörtelzusammensetzung offenbart, welche 40 Gew.-% Portlandzement, 54 Gew.-% Quarzsand, 2,5 Gew.-% Dispersionspulver, 0,4 Gew.-% Celluloseether und 1 Gew.-% Erhärtungsbeschleuniger sowie eine Vormischung aus Leichtfüllstoffen, Celluloseether und Abbindeverzögerer umfasst.

Die in den vorstehend genannten Schriften offenbarten Technologien sind bezüglich ihrer Wirtschaftlichkeit noch verbesserungswürdig, insbesondere bezüglich ihrer Ergiebigkeit. Die erwünschten wirtschaftlich vorteilhaften und ergiebigen Trockenmischungen sollen gute Produkteigenschaften sowohl im frischen, als auch im erhärteten Zustand aufweisen.

Der vorliegenden Erfindung lag somit die Aufgabe zugrunde, wirtschaftliche und qualitativ gute Trockenmischungen zur Herstellung von wässrigen Baustoffsystemen bereitzustellen.

Die Lösung dieser Aufgabe ist eine hydraulisch abbindende Trockenmischung
enthaltend

a) 20 bis 80 Gewichtsprozent eines zementären, hydraulischen Bindemittels,

b) 5 bis 75 Gewichtsprozent anorganische Füllstoffe und / oder organische Füllstoffe,

c) 0,5 bis 10 Gewichtsprozent eines redispergierbaren Polymerpulvers,

d) 0,1 bis 1,5 Gewichtsprozent eines auf Polysaccharidstrukturen basierenden Wasserretentionsmittels,

e) 0,3 bis 4,0 Gewichtsprozent eines Abbindebeschleunigers, ausgewählt aus der Gruppe Calciumformiat, Calciumchlorid, Calciumnitrat, wobei diese entweder

$f_a$) 0,02 bis 2,0 Gewichtsprozent anionisches pulverförmiges, mit Wasser oder Salzlösungen quellbares Copolymer, welches einen extrahierbaren Anteil kleiner als 10 Gew. % aufweist, wobei das Copolymer aufweist

$f_a$-i) 10 bis 60 Molprozent sulfonsäuregruppenhaltige Struktureinheiten der allgemeinen Formel (I)

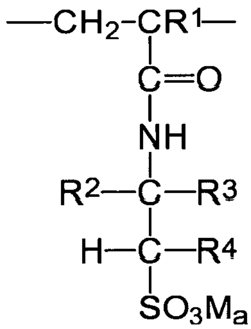

worin

$R^1$ gleich oder verschieden ist und durch Wasserstoff und/oder einen Methylrest repräsentiert wird,
$R^2$ $R^3$, $R^4$
jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,
M gleich oder verschieden ist und durch Wasserstoff, ein ein- oder zweiwertiges Metallkation und/oder ein Ammoniumion repräsentiert wird,
a gleich oder verschieden ist und durch 1/2 und/oder 1 repräsentiert wird,

$f_a$-ii) 30 bis 85 Molprozent (meth)acrylamidogruppenhaltige Struktureinheiten der allgemeinen Formel (II)

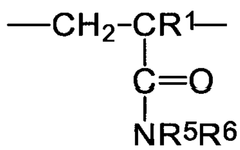

worin

$R^1$ die vorstehend genannte Bedeutung hat,
$R^5$ und $R^6$
jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird,

$f_a$-iii) 0,03 bis 1 Molprozent Struktureinheiten, die sich von Monomerverbindungen ableiten, die mehr als eine radikalisch polymerisierbare, ethylenisch ungesättigte Vinylgruppe aufweisen,
oder alternativ zu $f_a$)

$f_b$) 0,02 bis 2,0 Gewichtsprozent kationisches pulverförmiges, mit Wasser oder Salzlösungen quellbaresCopolymer, welches einen extrahierbaren Anteil kleiner als 10 Gew. % aufweist, wobei das Copolymer aufweist

$f_b$-i) 10 bis 60 Molprozent kationische, ein quaterniertes Stickstoffatom aufweisende Struktureinheiten der allgemeinen Formel (III)

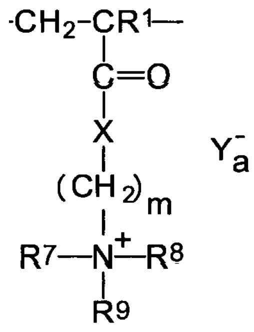

worin

$R^1$ die vorstehend genannte Bedeutung hat,
$R^7$, $R^8$, $R^9$, $R^{10}$
jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
m gleich oder verschieden ist und durch eine ganze Zahl von 1 bis 6 repräsentiert wird,
X gleich oder verschieden ist und durch Sauerstoff und/oder N-$R^{10}$ repräsentiert wird,
$Y^-_a$ gleich oder verschieden ist und durch ein Halogenid, $C_1$-bis $C_4$-Alkylsulfat, $C_1$-bis $C_4$-Alkylsulfonat und/oder Sulfat, repräsentiert wird, a gleich oder verschieden ist und durch 1/2 und/oder 1 repräsentiert wird,

$f_b$-ii) 30 bis 85 Molprozent (meth)acrylamidogruppenhaltige Struktureinheiten der allgemeinen Formel (II)

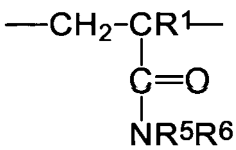

worin

$R^1$ die vorstehend genannte Bedeutung hat,
$R^5$ und $R^6$
jeweils die vorstehend genannten Bedeutungen haben,

$f_b$-iii) 0,03 bis 1 Molprozent Struktureinheiten, die sich von Monomerverbindungen ableiten, die mehr als eine radikalisch polymerisierbare, ethylenisch ungesättigte Vinylgruppe aufweisen,

enthält.

Die Anforderungen an moderne Baustofftrockenmischungen, ganz besonders im Bereich von Fliesenklebern und einigen weiteren Anwendungsgebieten, sind bezüglich ihrer Eigenschaften im noch nicht ausgehärteten Zustand (rheologische Verabeitungseigenschaften wie Abrutschwiderstand und Wasserretention) als auch im ausgehärteten Zustand (Abriebbeständigkeit, Kratzfestigkeit, Biegezugfestigkeit und Haftzugfestigkeiten auf verschiedenen Substraten) sehr hoch. Diese Eigenschaften werden wie in "R. Bayer, H. Lutz, Dry Mortars, Ullmann's Encyclopedia of Industrial Chemistry, 6th ed., vol. 11, Wiley-VCH, Weinheim, (2003), 83-108" beschrieben, durch auf dem Gebiet der Trockenmischungen bekannte Zusätze wie Wasserretentionsmittel auf Polysaccharidbasis (zum Beispiel Celluloseether) und redispergierbare Polymerpulver verbessert. Allerdings sind die genannten Zusätze, besonders die Dispersionspulver, im Vergleich zu den anderen Trockenmischungskomponenten sehr kostenintensiv. Die Ergiebigkeit von Trockenmischungen, welche definiert ist als der Quotient aus dem Volumen einer nach dem Anmischen der Trockenmischung mit Wasser einsatzfertigen Baustoffmischung und der Masse des Trockenmörtels, ist aus wirtschaftlichen Gründen als auch aufgrund weiterer Vorteile für den Anwender (z.B. muss weniger Trockenmörtel vorgehalten werden) verbesserungswürdig. Auch besteht die Notwendigkeit die Abbindegeschwindigkeit, bzw. die Entwicklung der (Früh)festigkeit der Trockenmörtel zu beschleunigen. Dies erfolgt vorteilhafter Weise unter anderem aufgrund seiner guten Wirksamkeit

durch die Verwendung von Calciumformiat oder auch anderen Calciumsalzen. Andere bekannte Abbindebeschleuniger wie zum Beispiel Alkanolamine würden besonders bei der Anwendung im Innenraumbereich den Nachteil einer unangenehmen Geruchsentwicklung aufweisen, bzw. könnten auch gesundheitlich bedenklich sein. Als technische Aufgabe leitet sich hieraus ab, durch geeignete Maßnahmen die Ergiebigkeit und Wirtschaftlichkeit der Trockenmörtel zu steigern, ohne eine Qualitätsminderung der Baustoffprodukte hinnehmen zu müssen.

Die Lösung dieser Aufgabe erfolgt durch die Verwendung der erfindungsgemäßen polymervergüteten Trockenmischungen, welche ein zur Steigerung der Toleranz gegenüber erhöhten W/Z - Werten geeignetes, superabsorbierendes, pulverförmiges Copolymer (Superabsorber) enthalten. Die Polymerchemie des Superabsorbers wurde dabei erfindungsgemäß so angepasst, dass eine hohe Wasseraufnahmekapazität auch in calciumionenhaltigen wässrigen Systemen gewährleistet ist, wie zum Beispiel in den erfindungsgemäßen zementösen, hydraulisch abbindenden Systemen, welche noch zusätzlich Calciumionen aus dem calciumhaltigen Beschleunigersalz enthalten. Die Verwendung erhöhter Mengen der äußerst billigen Komponente Wasser zur Steigerung der Ergiebigkeit wird erst durch die erfindungsgemäßen Trockenmörtel möglich, wodurch auch deren Wirtschaftlichkeit entscheidend verbessert wird. Überraschenderweise wurde gefunden, dass dabei nicht nur die vorstehend genannten Anforderungen an die Produkteigenschaften eingehalten oder verbessert werden können, sondern darüber hinaus auch noch teure Formulierungsbestandteile wie zum Beispiel die Wasserretentionsmittel auf Polysaccharidbasis und ganz besonders die redispergierbaren Dispersionspulver beträchtlich reduziert werden können. Besonders bei hohen Temperaturen, geringer Luftfeuchtigkeit und auch bei der Verwendung von stark Wasser anziehenden Fliesen oder Untergründen ist eine Verbesserung der Wasserretentionseigenschaften von Fliesenklebemörteln und der Haftzugwerte zu beobachten. Auch können, besonders bevorzugt in Fliesenklebermörteln, durch die Anwesenheit höherer Anteile Wasser in der Gesamtformulierung weitere wichtige Eigenschaften wie die klebeoffene Zeit, verlängert werden.

Zur Begriffsbestimmung soll noch angefügt werden, dass Trockenmischungen häufig in der Literatur auch als Trockenmörtel bezeichnet werden.

**Detaillierte Beschreibung der Erfindung**

a) Das zementäre hydraulische Bindemittel unterliegt bezüglich der Art des Zements keinen besonderen Beschränkungen. Es können Portlandzemente, insbesondere ausgewählt aus der Gruppe CEM I, II, III, IV und V und/oder Tonerdezemente (Aluminatzemente) zur Verwendung kommen. Weißzement ist besonders in den Fällen geeignet in denen eine entsprechende Farbgebung der Produkte eine Rolle spielt. Die genannten Zemente können einzeln oder als Mischungen eingesetzt werden. Der Gewichtsanteil des zementären hydraulischen Bindemittels in der Trockenmischung beträgt 20 bis 80 Gew. %, besonders bevorzugt von 30 bis 50 Gew. %. In einer weiteren Ausführungsform können optional zusätzlich zu den genannten Zementen auch puzzolanische und/oder latent hydraulische Bindemittel in der Trockenmischung enthalten sein. Bei den puzzolanisch und/oder latent hydraulischen Zusätzen werden vorzugsweise Flugasche, Mikrosilika, Metakaolin, Trassmehl, Alumosilikat, Tuff, Phonolith, Diatomeenerde, amorph gefälltes Silica, Ölschiefer sowie Hochofenschlacke mit haupsächlich nicht kristallinen Anteilen eingesetzt. Ihr Anteil in der Trockenmischung beträgt gegebenenfalls von 1 bis 30 Gew. %, bevorzugt sind sie bezogen auf den Zement von 5 bis 30 Gew. % enthalten.

b) Die Füllstoffe in den erfindungsgemässen Trockenmischungen sind in den wässrigen Systemen nur in geringem Maße löslich, bzw. quellbar. Sie wirken insbesondere nicht als ein Bindemittel.

Geeignete anorganische Füllstoffe sind zum Beispiel Quarzsand, Kalksteinmehl, Kreide, Marmor, Ton, Mergel, Aluminiumoxid, Talkum und/oder Schwerspat, wobei Quarzsand und Kalksteinmehl bevorzugt sind. Die anorganischen Füllstoffe können bevorzugt auch als Leichtfüllstoffe wie Mikrohohlkugeln aus Glas, wie Blähglas und als Alumosilikate, wie Perlithe und Blähton vorliegen. Leichtfüllstoffe auf natürlicher Basis wie zum Beispiel Mineralschaum, Bims, Schaumlava und/oder Bläh-Vermiculit sind ebenfalls bevorzugt. Erfindungsgemässe organische Füllstoffe sind beispielsweise geschredderte Plastikabfälle, wie zum Beispiel aus Polyvinylchlorid, Polystyrol, Polyethylen, Polypropylen oder Melaminharzen. Gummipartikel und/oder Styroporkugeln stellen bevorzugte erfindungsgemäße organische Füllstoffe dar.

Die Füllstoffe sind in der Trockenmischung von 5 bis 75 Gew. %, bevorzugt von 10 bis 60 Gew. %, besonders bevorzugt von 30 bis 50 Gew. % enthalten.

c) Als redispergierbare Polymerpulver werden (Co)polymere bezeichnet, die als wasserbasierte Dispersion durch einschlägige Polymerisationsverfahren wie zum Beispiel Emulsionspolymerisationsverfahren erhältlich sind und in einem weiteren Schritt durch geeignete Trocknungsmaßnahmen wie zum Beispiel Sprühtrockung in ein Polymerpulver überführt werden. Beim Einmischen in Wasser oder wässrige Systeme entsteht aus dem redispergierbaren

Polymerpulver wieder eine wasserbasierte Dispersion, daher die Bezeichnung als redispergierbares Polymerpulver. Durch die Verwendung der redispergierbaren Dispersionspulver in wässrigen Baustoffmischungen lassen sich vor allem im ausgehärteten Zustand wichtige Produkteigenschaften wie unter anderem Abriebbeständigkeit, Kratzfestigkeit, Biegezugfestigkeit und Oberflächenhaftung auf verschiedenen Substraten verbessern. Redispergierbare Polymerpulver wirken bekanntlich in der mit Wasser angerührten Baustoffmischung im Wesentlichen als organische Binder, wobei dieser Effekt hauptsächlich auf einer durch Verdunstung von Wasser geförderten Polymerfilmbildung aus den Primärpartikeln basiert.

Geeignet sind (Co)polymere auf der Basis von einem oder mehreren ethylenisch ungesättigten Monomeren, welche jeweils aus einer oder mehreren der folgenden Monomergruppen ausgewählt werden können: Vinylaromaten, Vinylester von verzweigten oder unverzweigten Alkylcarbonsäuren mit 1 bis 15 C-Atomen, Diene, (Meth)acrylsäureestern von verzweigten oder unverzweigten Alkoholen mit 1 bis 10 C-Atomen, Vinylhalogenide und Olefine. Die Monomere sollten dabei bevorzugt hydrophoben Charakters sein.

Beispiele für bevorzugte Monomere, die unter die Gruppe der Vinylaromaten fallen sind Styrol, Vinyltoluol und $\alpha$-Methylstyrol. Als bevorzugte Vinylester von verzweigten oder unverzweigten Alkylcarbonsäuren mit 1 bis 15 C-Atomen sind Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsäuren mit 5 bis 11 C-Atomen (Vinylversatate), beispielsweise VeoVa5® (Vinylpivalat), VeoVa9®, VeoVa10® und VeoVa11® (Handelsnamen der Firma Shell) zu nennen, wobei Vinylacetat und die vorstehend genannten Vinylversatate besonders bevorzugt sind. Als Diene sind bevorzugt 1,3-Butadien und Isopren geeignet, als (Meth)acrylsäureester von verzweigten oder unverzweigten Alkoholen mit 1 bis 10 C-Atomen bevorzugt Methyl(meth)acrylat, Ethyl(meth)acrylat, Propyl(meth)acrylat, n-Butyl(meth)acrylat und 2-Ethylhexylacrylat.

Bevorzugte Olefine sind Ethylen, Propylen, 1-Buten und 2-Methylpropen, besonders bevorzugt ist Ethylen. Die bevorzugten Vinylhalogenidmonomere sind Vinylchlorid und Vinylidenchlorid.

Als redispergierbare Polymerpulver geeignete (Co)polymere sind die nachfolgend aufgeführten Typen bevorzugt, wobei die sich auf die jeweiligen Monomere beziehenden Angaben in Gew. % des (Co)polymers zu verstehen sind und sich gegebenenfalls mit weiteren Monomereinheiten zu 100 Gew. % aufaddieren:

Aus der Gruppe der Polymerisate von Alkylcarbonsäurevinylestern sind bevorzugt Vinylacetat Polymere, welche gegebenenfalls teilhydrolysiert sein können; Vinylacetat-Ethylen Copolymere mit einem Ethylengehalt von 1 bis 60 Gew. %; Vinylacetat Copolymere mit 1 bis 50 Gew. % eines oder mehrerer, weiterer Vinylestermonomere wie Vinyllaurat, Vinylpivalat und insbesondere VeoVa9®, VeoVa10® und VeoVa11® (Handelsnamen der Firma Shell), wobei diese Copolymere noch als weiteres Monomer 1 bis 40 Gew. % Ethylen enthalten können; Vinylester-Ethylen-Vinylchlorid Copolymere mit einem Ethylengehalt von 1 bis 40 Gew. % und einem Vinylchloridgehalt von 20 bis 90 Gew. % (als Vinylester sind zum Beispiel Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsäuren mit 5 bis 11 C-Atomen (Vinylversatate), beispielsweise VeoVa5® (Vinylpivalat), VeoVa9®, VeoVa10® und VeoVa11® (Handelsnamen der Firma Shell) möglich); Vinylacetat-Acrylsäureester-Copolymerisate mit 1 bis 60 Gew. % Acrylsäureester, bevorzugt n-Butylacrylat, welche noch 1 bis 40 Gew. % Ethylen enthalten können.

Aus der Gruppe der (Meth)acrylsäureesterpolymere sind bevorzugt Copolymere aus den Monomereinheiten n-Butylacrylat und/oder 2-Ethylhexylacrylat; Copolymere von Methylmethacrylat mit n-Butylacrylat und/oder 2-Ethylhexylacrylat und Copolymere von Methylmethacrylat mit 1,3- Butadien.

Aus der Gruppe der Vinylhalogenid Copolymere sind neben den vorstehend genannten Vinylester-Ethylen-Vinylchlorid Copolymeren, Vinylchlorid-Ethylen Copolymere und Vinylchlorid-Acrylat Copolymere bevorzugt.

Aus der Gruppe der Vinylaromat Copolymere sind bevorzugt Styrol - Butadien Copolymere und Styrol - Acrylsäureester Copolymere wie Styrol- n-Butylacrylat oder Styrol - 2-Ethylhexylacrylat mit einem Styrolgehalt von jeweils 10 bis 70 Gew. %. In einer weiteren Ausführungsform besonders bevorzugt sind Vinylacetat Polymere, Vinylacetat-Ethylen Copolymere mit einem Ethylengehalt von 1 bis 60 Gew. %, Vinylacetat Copolymere mit 1 bis 50 Gew. % eines oder mehrerer, weiterer Vinylestermonomere wie Vinyllaurat, Vinylpivalat und insbesondere Vinylversatate, wie beispielsweise VeoVa9®, VeoVa10® und VeoVa11® (Handelsnamen der Firma Shell), wobei diese Copolymere noch als weiteres Monomer 1 bis 40 Gew. % Ethylen enthalten können. Besonders bevorzugt sind auch Vinylacetat-Acrylsäureester-Copolymere mit 1 bis 60 Gew. % Acrylsäureester, bevorzugt n-Butylacrylat, welche noch 1 bis 40 Gew. % Ethylen enthalten können. Weiterhin sind besonders bevorzugt Styrol - Butadien Copolymere und Styrol - Acrylsäureester Copolymere, wie Styrol- n-Butylacrylat oder Styrol - 2-Ethylhexylacrylat mit einem Styrolgehalt von jeweils 10 bis 70 Gew. %.

Das redispergierbare Polymerpulver c) liegt insbesondere bevorzugt vor als Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten

Alkoholen mit 1 bis 10 C-Atomen darstellen.

Gegebenenfalls können die (Co)polymere noch funktionelle Comonomereinheiten in einer Menge von 0,1 bis 10 Gew. %, bezogen auf das Gesamtgewicht des Polymerisats, enthalten. Diese funktionellen Comonomereinheiten können ausgewählt sein aus der Gruppe der Mono- oder Dicarbonsäuren, wie zum Beispiel (Meth)acrylsäure und/oder Maleinsäure; der Gruppe der ethylenisch ungesättigten Carbonsäureamide wie zum Beispiel (Meth)acrylamid; aus der Gruppe der ethylenisch ungesättigten Sulfonsäuren beziehungsweise deren Salzen, vorzugsweise Vinylsulfonsäure und/oder Styrolsulfonsäure; aus der Gruppe der mehrfach ethylenisch ungesättigten Comonomere, beispielsweise Divinyladipat, Triallylisocyanurat, Diallylmaleat und/oder Allylmethacrylat. Der Anteil (meth)acrylamidogruppenhaltiger Struktureinheiten in den redispergierbaren Polymerpulvern gemäß der allgemeinen Formel II beträgt bevorzugt kleiner als 25 Molprozent. Die (Co)polymerisation erfolgt nach in der Technik einschlägig bekannten Verfahren wie dem Emulsionspolymerisationsverfahren. Die erhaltenen Dispersionen können sowohl mit einem Emulgator stabilisiert werden, als auch mit einem Schutzkolloid wie zum Beispiel Polyvinylalkohol. Um die redispergierbaren Polymerpulver zu erhalten wird eine Trocknung vorgenommen, wobei die Trocknung durch übliche Verfahren wie Sprühtrocknung, Gefriertrocknung, Koagulation der Dispersion und anschliessende Wirbelschichttrocknung erfolgen kann. Das bevorzugte Verfahren ist die Sprühtrocknung. Die redispergierbaren Polymerpulver sind in der hydraulisch abbindenden Trockenmischung von 0,5 bis 10 Gew. %, bevorzugt von 0,8 bis 7, besonders bevorzugt von 1,0 bis 4 Gew. % enthalten.

d) Die auf Polysaccharidstrukturen basierenden, bevorzugt wasserlöslichen Wasserretentionsmittel dienen neben der Wasserrückhaltung auch zur Einstellung von rheologischen Eigenschaften der entsprechenden Baustoffmischungen, beispielsweise der Viskosität und / oder der Thixotropie. Thixotrope Eigenschaften sind beispielsweise bei Fliesenklebemörteln zur Verbesserung des Abrutschwiderstands bei gleichzeitig guter Korrigierbarkeit der Lage der Fliese notwendig.

Bevorzugt sind Celluloseether, beispielsweise Alkylcellulosen wie Methylcellulose, Ethylcellulose, Propylcellulose und Methylethylcellulose, Hydroxyalkylcellulosen wie zum Beispiel Hydroxyethylcellulose (HEC), Hydroxypropylcellulose (HPC) und Hydroxyethylhydroxypropylcellulose, Alkylhydroxyalkylcellulosen wie zum Beispiel Methylhydroxyethylcelluose (MHEC), Methylhydroxypropylcelluose (MHPC) und Propylhydroxypropylcellulose. Bevorzugt sind die Celluloseetherderivate Methylcellulose (MC), Hydroxypropylcellulose (HPC), Hydroxyethylcellulose (HEC) und Ethylhydroxyethylcellulose (EHEC), besonders bevorzugt sind Methylhydroxyethylcelluose (MHEC) und Methylhydroxypropylcelluose (MHPC). Die vorstehend genannten Celluloseetherderivate, welche jeweils durch eine entsprechende Alkylierung oder Alkoxylierung von Cellulose erhältlich sind, liegen bevorzugt als nichtionische Strukturen vor. Carboxymethylcellulose (CMC) dagegen ist beispielsweise weniger geeignet, da die Carbonsäuregruppen durch Wechselwirkung mit den in wässrigen zementösen Systemen vorliegenden Calciumionen die Löslichkeit der Carboxymethylcellulose herabsetzen und damit deren Wirksamkeit. Dieser Effekt wird durch calciumhaltige Abbindebeschleuniger verstärkt. Daneben kommen auch bevorzugt nichtionische Stärkeetherderivate zum Einsatz, wie zum Beispiel Hydroxypropylstärke, Hydroxyethylstärke und Methylhydroxypropylstärke. Bevorzugt ist die Hydroxypropylstärke. Die Stärkeetherderivate liegen in der Trockenmischung entweder alleine, bevorzugt aber in Kombination mit einem oder mehreren der vorstehend genannten Celluloseetherderivate vor, besonders bevorzugt liegen sie zusammen mit Methylhydroxyethylcelluose (MHEC) und/oder Methylhydroxypropylcelluose (MHPC) vor. Ebenfalls bevorzugt sind mikrobiell erzeugte Polysaccharide wie Welan Gum und/oder Xanthane und natürlich vorkommende Polysaccharide wie zum Beispiel Alginate, Carrageenane und Galactomannane. Diese können aus entsprechenden Naturprodukten durch extraktive Verfahren gewonnen werden, wie beispielsweise im Falle der Alginate und Carrageenane aus Algen, im Falle der Galactomannane von Johannisbrotbaumkernen. Die Auswahl der Wasserretentionsmittel und der eingesetzten Menge(n), erfolgt entsprechend den Anforderungen und wird durch entsprechende Routineversuche eingestellt. In der erfindungsgemäßen Trockenmischung können eines oder auch mehrere der vorstehend genannten Wasserretentionsmittel vorliegen.

In der hydraulisch abbindenden Trockenmischung liegen die auf Polysaccharidstrukturen basierenden Wasserrententionsmittel bezogen auf die Trockenmischung von 0,1 bis 1,5 Gew. % vor, bevorzugt von 0,2 bis 1,2 Gew. %, besonders bevorzugt von 0,3 bis 1,0 Gew. %.

e) Geeignete Abbindebeschleuniger sind die wasserlöslichen Calciumsalze Calcium-formiat, Calciumchlorid und/oder Calciumnitrat. Bevorzugt ist Calciumformiat. Die Abbindebeschleuniger werden mit einem Anteil von 0,3 bis 4,0 Gew. %, bevorzugt von 0,5 bis 3,0 Gew. %, besonders bevorzugt von 0,8 bis 2,5 Gew. % bezogen auf die Trockenmischung eingesetzt. Sie dienen sowohl zur Verkürzung der Abbindezeiten als auch der Steigerung der Frühfestigkeiten der Baustoffprodukte.

$f_a$) bzw. $f_b$) Die mit Wasser oder wässrigen Salzlösungen quellbaren pulverförmigen Copolymere stellen vernetzte, hochmolekulare, entweder anionische oder kationische Polyelektrolyte dar, welche durch radikalische Polymerisation geeigneter, ethylenisch ungesättigter Vinylverbindungen und anschließende Trocknungsmaßnahmen der erhaltenen Copolymere erhältlich sind. In der Technik spricht man üblicher Weise von Superabsorbierenden Polymeren (SAP) oder einfach Superabsorbern. Bei Kontakt mit Wasser oder wässrigen Systemen bildet sich unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber vernetzter wasserunlöslicher Polymere, die als dreidimensionale Netzwerke vorliegen. Das aus dem pulverförmigen, superabsorbierenden Copolymer durch Wasseraufnahme gebildete Hydrogel soll möglichst wenig in Wasser lösliche Anteile aufweisen, um die Rheologieeigenschaften der Baustoffmischungen nicht negativ zu beeinflussen. In vorliegender Erfindung ist es vorteilhaft solche Superabsorber zu verwenden, die auch bei hohen Salzkonzentrationen, insbesondere hohen Calciumionenkonzentrationen wie sie üblicher Weise in zementösen wässrigen Systemen vorliegen, ein hohes Wasserabsorptionsvermögen aufweisen.

Die erfindungsgemäßen pulverförmigen Copolymere (Superabsorber) liegen bevorzugt entweder als anionische oder kationische Polyelektrolyte und im Wesentlichen nicht als Polyampholyte vor. Unter Polyampholyten versteht man Polyelektrolyte, die sowohl kationische als auch anionische Ladungen an der Polymerkette tragen. Am meisten bevorzugt sind also Copolymere rein anionischer oder kationischer Natur. Allerdings können bis zu 10 Prozent, bevorzugt weniger als 5 Prozent der Gesamtladung eines Polyelektrolyten, durch entgegengesetzte Ladungsanteile ersetzt werden. Dies gilt sowohl für den Fall überwiegend anionischer Copolymere mit einem relativ kleinen kationischen Anteil, als auch umgekehrt für überwiegend kationische Copolymere mit einem relativ kleinen anionischen Anteil.

Zunächst sollen die anionischen superabsorbierenden Copolymere $f_a$) beschrieben werden. Als anionische Struktureinheiten sind sulfonsäuregruppenhaltige Struktureinheiten gemäß der allgemeinen Formel I enthalten. Sulfonsäuregruppenhaltige Monomere sind gegenüber carbonsäuregruppenhaltigen Monomeren bevorzugt, da sie in wässrigen Salzlösungen, besonders bei Anwesenheit von Calciumionen stabilere Hydrogele bilden, welche mehr Wasser aufnehmen können. Insbesondere sind die sulfonsäuregruppenhaltigen Superabsorber den hauptsächlich carbonsäuregruppenhaltigen Superabsorbern, wie solchen auf der Basis von vernetzter hochmolekularer Polyacrylsäure, bezüglich dieser Eigenschaft überlegen. Bevorzugt geht die der allgemeinen Formel I entsprechende sulfonsäuregruppenhaltige Struktureinheit aus der Copolymerisation von einer oder mehreren der Monomerspezies 2-Acrylamido-2-methylpropansulfonsäure, 2-Methacrylamido-2-methylpropansulfonsäure, 2-Acrylamidobutansulfonsäure, und/oder 2-Acrylamido-2,4,4-trimethylpentansulfonsäure, bzw. jeweils den Salzen der genannten Säuren hervor. Besonders bevorzugt sind 2-Acrylamido-2-methylpropansulfonsäure und deren Salzverbindungen. Die den Salzverbindungen der Säuren zugehörigen Kationen können dabei jeweils als ein- oder zweiwertige Metallkationen vorliegen, wie vorzugsweise Natrium-, Kalium-, Calcium- oder Magnesiumionen oder als Ammoniumionen, die sich sich ableiten von Ammoniak, primären, sekundären oder tertiären, $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen. Die Alkylreste können jeweils verzweigt oder unverzweigt sein. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin. Bevorzugte Kationen sind Alkalimetallionen und/oder Ammoniumionen, besonders bevorzugt ist das Natriumion.

In den anionischen superabsorbierenden Copolymeren $f_a$) sind die sulfonsäuregruppenhaltigen Struktureinheiten von 10 bis 60 Molprozent, bevorzugt von 15 bis 60 und ganz besonders bevorzugt von 20 bis 50 Molprozent enthalten.

In den anionischen superabsorbierenden Copolymeren $f_a$) sind weiterhin (meth)acrylamidogruppenhaltige Struktureinheiten entsprechend der allgemeinen Formel II enthalten. Die (meth)acrylamidogruppenhaltigen Struktureinheiten sind in analoger Weise auch in den kationischen superabsorbierenden Copolymeren enthalten. Die nachfolgende Beschreibung soll sowohl für die anionischen als auch die kationischen superabsorbierenden Copolymere zutreffen. Beispielsweise gehen die Struktureinheiten aus der Copolymerisation von einer oder mehreren der Monomerspezies Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid hervor. Bevorzugt sind Methylacrylamid, N,N-Dimethylacrylamid, und Methacrylamid, besonders bevorzugt ist Acrylamid. In den anionischen und auch in den kationischen superabsorbierenden Copolymeren sind die (meth)acrylamidogruppenhaltigen Struktureinheiten von 30 bis 85 Molprozent, bevorzugt von 40 bis 85 und ganz besonders bevorzugt von 50 bis 80 Molprozent enthalten.

Die Struktureinheiten des anionischen superabsorbierenden Copolymers, die sich von bevorzugt wasserlöslichen Monomerverbindungen ableiten, die mehr als eine radikalisch polymerisierbare, ethylenisch ungesättigte Vinylgruppe aufweisen, sollen in der weiteren Beschreibung als Vernetzermonomere bezeichnet werden. Sie sind in analoger Weise auch in den kationischen superabsorbierenden Copolymeren enthalten. Die nachfolgende Beschreibung der Vernetzermonomere soll sowohl für die anionischen als auch die kationischen superabsorbierenden Copolymere zutreffen.

Bevorzugt geht die den Vernetzermonomeren entsprechende Struktureinheit aus der Polymerisation von einer oder mehrerer der folgenden Monomerspezies hervor: Mehrfach (meth)acrylfunktionelle Monomere, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldimethacrylat ethoxyliertes Bisphenol-A-diacrylat, ethoxyliertes Bisphenol-A-dimethacrylat, Ethylenglykoldimethacrylat, 1,6-Hexandioldiacrylat, 1,6-Hexandioldimethacrylat, Neopentylglykoldimethacrylat, Polyethylenglykoldiacrylat, Polyethylenglykoldimeth-acrylat, Triethylenglykoldiacrylat, Triethylenglykoldimethacrylat, Tripropylenglykoldiacrylat, Tetraethylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethyloltrimethacrylat, Cyclopentadiendiacrylat, Tris(2-hydroxyethyl)isocyanurattriacrylat und/oder Tris(2-hydroxy)isocyanurattrimethacrylat; mehr als eine Vinylester-, bzw. Allylestergruppe mit entsprechende Carbonsäure aufweisende Monomere wie zum Beispiel Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat; mehr als eine (Meth)acrylamidogruppe aufweisende Monomere wie N,N'-Methylenbisacrylamid und/oder N,N'-Methylenbismethacrylamid und mehr als eine Maleinimidgruppe aufweisende Monomere wie Hexamethylenbismaleinimid; mehr als eine Vinylethergruppe aufweisende Monomere wie Ethylenglykoldivinylether, Triethylenglykoldivinylether und/oder Cyclohexandioldivinylether. Auch können Allylamino- oder Allylammoniumverbindungen mit mehr als einer Allylgruppe, wie Triallylamin und/oder Tetraallylammoniumsalze eingesetzt werden. Aus der Gruppe der mehr als eine vinylaromatische Gruppe aufweisenden Monomere sei Divinylbenzol genannt.

Bei der Auswahl der entsprechenden, mehr als eine ethylenisch ungesättigte Vinylgruppe aufweisenden Monomere ist bevorzugt darauf zu achten, dass diese in wässrigen Systemen, insbesondere bei den in zementösen Systemen zu erwartenden hohen pH-Werten eine gute Hydrolysebeständigkeit aufweisen. Beim Anmischen der Baustoffmischungen treten mechanische Belastungen als Scherkräfte auf, was gerade bei den hochmolekularen vernetzten Polymersystemen zum Bruch von Bindungen führen kann. Aus diesem Grund sind die entsprechenden methacrylfunktionellen gegenüber den acrylfunktionellen Vernetzermonomeren bevorzugt, die (meth)acrylamidofunktionellen und die allylaminofunktionellen Monomere sind besonders bevorzugt. Beispiele für besonders bevorzugte Vernetzermonomere sind N,N'-Methylenbisacrylamid, N,N'-Methylenbismethacrylamid, Triallylisocyanurat, Triallylamin und/oder Tetraallylammoniumsalze, insbesonders bevorzugte Vernetzermonomere sind N,N'-Methylenbisacrylamid, N,N'-Methylenbismethacrylamid, Triallylisocyanurat und / oder Triallylamin. Es können jeweils eines oder mehrere der Vernetzermonomere in den Copolymeren vertreten sein. In den anionischen und kationischen superabsorbierenden Copolymeren sind die Vernetzermonomere von 0,03 bis 1 Molprozent, bevorzugt von 0,05 bis 0,7 Molprozent enthalten. Dabei soll die Menge der Vernetzermonomere mindestens so hoch gewählt werden, dass möglichst wasserunlösliche Copolymere, bzw. Copolymere mit einem geringen löslichen, bzw. einem geringen extrahierbaren Anteil, erhalten werden. Für den Fachmann ist dabei die Menge an Vernetzermonomeren durch Ausführung von Routineversuchen in einfacher Weise zu bestimmen. Die Vernetzung erfolgt im Laufe der Copolymerisationsreaktion, zusätzlich kann auch im Anschluss an die Copolymerisationsreaktion eine Nachvernetzung, wie sie für Superabsorber in "F. Buchholz, A. Graham, Modern Superabsorber Technology, John Wiley & Sons Inc., 1989, 55-67" beschrieben ist, erfolgen.

Neben den vorstehend genannten, gemäß dem Hauptanspruch notwendigen drei Typen von Struktureinheiten der anionischen Copolymere können fakultativ noch von 1 bis 20 Molprozent weitere, bevorzugt hydrophile Struktureinheiten enthalten sein. Diese leiten sich vorzugsweise von neutralen oder anionischen, ethylenisch ungesättigten Monomeren ab. Für kationische Monomere gelten die vorstehend genannten Beschränkungen bezüglich der Mengenanteile im anionischen Copolymer, d.h. es können bis zu 10 Prozent, bevorzugt weniger als 5 Prozent der anionischen Ladungen durch kationische Ladungen ersetzt werden. Als neutrale Monomere sind beispielsweise möglich Acrylnitril, Methacrylnitril, Vinylpyridin, Vinylacetat und/oder hydroxygruppenhaltige (Meth)acrylsäureester wie Hydroxyethylacrylsäure, Hydroxypropylacrylsäure und/oder Hydroxypropylmethacrylsäure.

Bevorzugt leiten sich die fakultativen Struktureinheiten von Monomeren ab, ausgewählt aus der Gruppe ethylenisch ungesättigter Carbonsäuren oder Dicarbonsäuren oder deren Anhydride wie Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, Maleinsäure und Maleinsäureanhydrid, p-Chlorzimtsäure, β-Stearylsäure, Itaconsäure, Citraconsäure, Mesacronsäure, Glutaconsäure, Aconitsäure, Fumarsäure und/oder Tricarboxyethylen. Besonders bevorzugt leiten sich die weiteren Struktureinheiten von Acrylsäure und seinen Salzen und/oder ethylenisch ungesättigten Sulfonsäuremonomeren und jeweils ihren entsprechenden Salzen wie Vinylsulfonsäure, Allylsulfonsäure, Styrolsulfonsäure, Sulfoethylacrylat, Sulfoethylmethacrylat, Sulfopropylacrylat, Sulfopropylmethacrylat und/oder 2-Hydroxy-3-methacryloxypropylsulfonsäure ab.

Im Folgenden sollen die kationischen superabsorbierenden Copolymere $f_b$) beschrieben werden. In den kationischen Copolymeren geht die der allgemeinen Formel III entsprechende, ein quaterniertes Stickstoffatom aufweisende Struktureinheit bevorzugt hervor aus der Polymerisation von einer oder mehreren Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze und / oder [3-(Methacryloylamino)-propyl]-trimethylammoniumsalze. Die genannten Salze liegen bevorzugt als Halogenide oder Methosulfate vor. Besonders bevorzugt sind [3-(Acryloylamino)-propyl]-trimethylammoniumsalze und / oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC). In den kationischen superabsorbierenden Copolymeren ist die ein quaterniertes Stickstoffatom aufweisende Struktureinheit der allgemeinen Formel III von 10 bis 60 Molprozent, bevorzugt von 15 bis 60 und besonders bevorzugt von 20 bis 50 Molprozent enthalten.

Ebenso wie die anionischen superabsorbierenden Copolymere $f_a$) enthalten auch die kationischen superabsorbierenden Copolymere $f_b$) die gleichen (meth)acrylamidogruppenhaltigen Struktureinheiten, gemäß der allgemeinen Formel II. Die Struktureinheiten nach allgemeiner Formel II wurden vorstehend schon näher bei den anionischen Copolymeren beschrieben, auf diese Beschreibung wird hiermit verwiesen und sie soll an dieser Stelle als eingefügt gelten.

Auch die Struktureinheiten, die sich von bevorzugt wasserlöslichen Monomerverbindungen ableiten, die mehr als eine radikalisch polymerisierbare, ethylenisch ungesättigte Vinylgruppe aufweisen (Vernetzermonomere), sind ebenso im kationischen als auch im anionischen superabsorbierenden Copolymer enthalten. Diese Struktureinheit wurde ebenfalls vorstehend näher bei den anionischen superabsorbierenden Copolymeren beschrieben. Auf diese Beschreibung wird hiermit ebenfalls verwiesen und sie soll an dieser Stelle als eingefügt gelten.

Neben den vorstehend genannten, gemäß dem Hauptanspruch notwendigen drei Typen von Struktureinheiten der kationischen Copolymere können fakultativ noch von 1 bis 20 Molprozent weitere, bevorzugt hydrophile Struktureinheiten enthalten sein. Diese leiten sich vorzugsweise von neutralen oder auch kationischen, ethylenisch ungesättigten Monomeren ab. Für anionische Monomere gelten die vorstehend genannten Beschränkungen bezüglich der Mengenanteile im kationischen Copolymer, d.h. es können bis zu 10 Prozent, bevorzugt weniger als 5 Prozent der kationischen Ladungen durch anionische Ladungen ersetzt werden. Als neutrale Monomere sind beispielsweise möglich Acrylnitril, Methacrylnitril, Vinylpyridin, Vinylacetat und/oder hydroxygruppenhaltige (Meth)acrylsäureester wie Hydroxyethylacrylsäure, Hydroxypropylacrylsäure und/oder Hydroxypropylmethacrylsäure. Als kationische Monomere sind beispielsweise N,N'-Dimethyl-diallyl-ammoniumchhlorid und N,N'-Diethyl-diallyl-ammoniumchlorid geeignet.

Die Herstellung der erfindungsgemäßen anionischen oder kationischen superabsorbierenden Copolymere kann in an sich bekannter Weise durch Verknüpfung der die jeweiligen Struktureinheiten bildenden Monomere durch radikalische Polymerisation erfolgen (anionische Copolymere: Struktureinheiten nach den allgemeinen Formeln I, II und vorstehend beschriebene Vernetzermonomere, optional weitere anionische oder neutrale Monomere; kationische Copolymere: Struktureinheiten nach den allgemeinen Formeln III, II und vorstehend beschriebene Vernetzermonomere, optional weitere kationische oder neutrale Monomere).

Alle als Säure vorliegenden Monomere können als freie Säuren oder in deren Salz-form polymerisiert werden. Ferner kann die Neutralisation der Säuren durch Zugabe entsprechender Basen auch nach der Copolymerisation erfolgen, eine Teilneutralisation vor oder nach der Polymerisation ist ebenfalls möglich. Die Neutralisation der Monomere, bzw. der Copolymere kann beispielsweise mit den Basen Natrium-, Kalium-, Calcium- Magnesiumhydroxid und/oder Ammoniak erfolgen. Ebenfalls als Basen geeignet sind primäre, sekundäre oder tertiäre, jeweils verzweigte oder unverzweigte Alkylgruppen aufweisende $C_1$- bis $C_{20}$-Alkylamine, $C_1$- bis $C_{20}$-Alkanolamine, $C_5$- bis $C_8$-Cycloalkylamine und/oder $C_6$- bis $C_{14}$-Arylamine. Es können eine Base oder mehrere eingesetzt werden. Bevorzugt ist die Neutralisation mit Alkalimetallhydroxiden und/oder Ammoniak, besonders bevorzugt ist Natriumhydroxid. Die anorganischen oder organischen Basen sollen so ausgewählt werden, dass sie mit der jeweiligen Säure relativ gut wasserlösliche Salze bilden.

Die Copolymerisation der Monomere erfolgt bevorzugt durch radikalische Substanz-, Lösungs-, Gel, Emulsions-, Dispersions- oder Suspensionspolymerisation. Da es sich bei den erfindungsgemäßen Produkten um hydrophile, in Wasser quellbare Copolymere handelt, ist die Polymerisation in wässriger Phase, die Polymerisation in umgekehrter Emulsion, bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln.

Die Copolymerisation des superabsorbierenden Polymeren kann in einer besonders bevorzugten Ausführungsform als adiabatische Polymerisation durchgeführt und sowohl mit einem Redox - Initiatorsystem als auch mit einem Photoinitiator gestartet werden. Außerdem ist eine Kombination von beiden Startvarianten möglich. Das Redox-Initiatorsystem besteht aus mindestens zwei Komponenten, einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxid, Butylhydroperoxid oder Persäuren wie Peressigsäure. Daneben können aber auch andere Oxidationsmittel eingesetzt werden, zum Beispiel Kaliumpermanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (zum Beispiel Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze möglich [Kupfer(I); Mangan(II); Eisen(II)]. Auch Phosphorverbindungen können verwendet werden, zum Beispiel Natriumhypophosphit.

Im Falle einer Photopolymerisation wird diese mit UV-Licht gestartet, welches den Zerfall eines Photoinitiators bewirkt. Als Photoinitiator können zum Beispiel Benzoin- und Benzoinderivate, wie Benzoinether, Benzil und seine Derivate, wie Benzilketale, Acryldiazoniumsalze, Azoinitiatoren wie z.B. 2,2'-Azobis(isobutyronitril), 2,2'-Azobis(2-amidinopropan)-hydrochlorid und/oder Acetophenonderivate verwendet werden.

Der Gewichtsanteil der oxidierenden und der reduzierenden Komponente im Falle der Redox-Initiatorsysteme liegt bevorzugt jeweils im Bereich zwischen 0,00005 und 0,5 Gew. %, besonders bevorzugt jeweils zwischen 0,001 und 0,1 Gew. %. Für Photoinitiatoren liegt dieser Bereich bevorzugt zwischen 0,001 und 0,1 Gew. %, besonders bevorzugt zwischen 0,002 und 0,05 Gew. %. Die genannten Gewichtsprozentangaben für oxidierende und reduzierende Komponente und Photoinitiatoren beziehen sich dabei jeweils auf die Masse der zur Copolymerisation eingesetzten Monomere. Die Auswahl der Polymerisationsbedingungen, insbesondere der Initiatormengen erfolgt mit dem Ziel möglichst langkettige Polymere zu erzeugen. Aufgrund der Unlöslichkeit der vernetzten Copolymere sind die Molekulargewichte einer Messung allerdings nur sehr schwer zugänglich.

Die Copolymerisation wird bevorzugt in wässriger Lösung, bevorzugt in konzentrierter wässriger Lösung diskontinuierlich in einem Polymerisationsgefäß (Batchverfahren) oder kontinuierlich nach der in der US-A-4857610 beschriebenen "endlosen Band" Methode durchgeführt. Eine weitere Möglichkeit ist die Polymerisation in einem kontinuierlich oder diskontinuierlich betriebenen Knetreaktor. Der Prozess wird üblicherweise bei einer Temperatur zwischen -20 und 20 °C, bevorzugt zwischen -10 und 10 °C gestartet und bei Atmosphärendruck ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt in der Regel eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen.

In einer weiteren bevorzugten Ausführungsform erfolgt die Copolymerisation als inverse Suspensionspolymerisation der wässrigen Monomerphase in einem organischen Lösemittel. Hierbei wird bevorzugt so verfahren, dass man das in Wasser gelöste und gegebenenfalls neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 5 Gew. %, bevorzugt 0,1 bis 3 Gew. % bezogen auf die Monomere verwendet werden. Die W/O-Emulgatoren und Schutzkolloide werden auch als Stabilisatoren bezeichnet. Es können übliche, in der inversen Suspensionspolymerisationstechnik als Stabilisatoren bekannte Verbindungen wie Hydroxypropylcellulose, Ethylcellulose, Methylcellulose, Celluloseacetatbutyratmischether, Copolymere aus Ethylen und Vinylacetat, aus Styrol und Butylacrylat, Polyoxyethylensorbitanmonooleat, -laurat, bzw. - stearat und Blockcopolymere aus Propylen- und/oder Ethylenoxid verwendet werden.

Als organische Lösemittel kommen beispielsweise lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin, sowie aromatische Kohlenwasserstoffe wie Benzol, Toluol und Xylol zum Einsatz. Darüber hinaus eignen sich Alkohole, Ketone, Carbonsäureester, Nitroverbindungen, halogenhaltige Kohlenwasserstoffe, Ether und viele andere organische Solventien. Bevorzugt sind solche organischen Lösemittel, die mit Wasser azeotrope Gemische bilden, besonders bevorzugt sind solche, die dabei einen möglichst hohen Wasseranteil im Azeotrop aufweisen.

Die wasserquellbaren Copolymere fallen zunächst in gequollener Form als fein verteilte wässrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein pulverförmiger Feststoff. Die inverse Suspensionspolymerisation hat bekanntlich den Vorteil, dass durch Variation der Polymerisationsbedingungen die Partikelgrößenverteilung der Pulver kontrolliert werden kann und damit ein zusätzlicher Verfahrensschritt (Mahlvorgang) zur Einstellung der Partikelgrößenverteilung meist vermieden werden kann.

Bevorzugt sind anionische und kationische superabsorbierenden Copolymere deren gemäß der Norm edana 420.2-02 bestimmte Partikelgrößenverteilung so beschaffen ist, dass mehr als 98 Gewichtsprozent ein Sieb der Maschengröße 200 μm passieren und besonders bevorzugt mehr als 98 Gewichtsprozent ein Sieb der Maschengröße 100 μm passieren. Ganz besonders bevorzugt passieren mehr als 98 Gewichtsprozent ein Sieb der Maschengröße 63 μm.

Die Partikelgrößenverteilung kann durch Mahlen der nach dem Trocknen der Copolymere erhaltenen Produkte erfolgen. Große Partikel würden in den wässrigen Baustoffmischungen auch schon visuell erkennbare inhomogene Bereiche hervorrufen, in denen nur das aus Quellung des Superabsorbers entstandene Hydrogel vorliegt. Auch bestünde verstärkt die Gefahr einer Entmischung der Hydrogele und weitere wichtige Eigenschaften wie zum Beispiel die Festigkeitsentwicklung könnten negativ beeinflusst werden. Auch die Wahrscheinlichkeit einer vom Anwender unerwünschten Nachverdickung ist bei großen Partikeln höher. Starke Scherkräfte wie sie zum Beispiel beim Anrühren der Baustoffmischungen mit einer zum Mischen von Fliesenklebern etc. üblichen Bohrmaschine oder ähnlichen Mischern auftreten, können sich bei großen Partikelgrößen stärker auswirken werden und zu einer Zerkleinerung der Hydrogele und damit einem Ansteigen der für den Verdickungseffekt verantwortlichen löslichen Anteile, bzw. extrahierbaren Anteile führen (Nachverdickungseffekt). Die Einstellung der richtigen Konsistenz der Baustoffmischung wird für den Anwender dann

sehr schwierig. Eine Testmethode bezüglich der Scherstabilität besteht darin, z.B. einen erfindungsgemäßen Fliesenkleber mit Wasser anzurühren und dann mit einer Bohrmaschine noch weitere 30 Sekunden zu rühren. Danach sollte sich bevorzugt das Ausbreitmaß um nicht mehr als 0,5 cm ändern.

Vorteilhafte superabsorbierende Copolymere entwickeln rasch ihre volle Wasseraufnahmekapazität in den wässrigen Systemen. Eine langsame Wasseraufnahme würde ebenfalls zu einer unerwünschten Nachverdickung durch langsamen Wasserentzug aus der Baustoffmischung führen. Zur Überprüfung ob eine Nachverdickung vorliegt, gibt man zu der Baustoffmischung, z.B. einem Fliesenkleber Wasser zu und rührt diese an. Nach der Wasserzugabe soll sich bevorzugt im Zeitraum zwischen der dritten und zehnten Minute das Ausbreitmaß um weniger als 0,5 cm verändern.

Eine bevorzugte Eigenschaft der anionischen als auch der kationischen superabsorbierenden Copolymere ist ihre Unlöslichkeit in wässrigen Systemen, bzw. die Eigenschaft nur einen geringen extrahierbaren Anteil aufzuweisen. Der extrahierbare Anteil ist der Anteil, der aus dem superabsorbierenden Polymer in ein umgebendes wässriges Medium diffundieren kann. Die Methode zu Bestimmung des extrahierbaren Anteils wird im Kapitel Testmethoden näher beschrieben. Der extrahierbare Anteil ist jeweils bezogen auf die Masse des Superabsorbers bevorzugt kleiner als 10 Gew. %, besonders bevorzugt kleiner als 9 Gew. % und insbesondere bevorzugt kleiner als 8 Gew. %.

Die Aufnahmekapazität der anionischen als auch kationischen Superabsorber in wässrigen Salzlösungen und insbesondere auch in Calciumionen enthaltenden Lösungen ist bevorzugt nicht zuletzt aus wirtschaftlichen Gründen möglichst groß. Die Aufnahmekapazität ist definiert als Quotient aus der Masse der aufgenommenen Flüssigkeit und der Masse des trocknen Superabsorbers (Angabe in g/g) und wird gemäß der Norm edana 440.2-02 unter Abwandlung der Vorschrift, d.h. Ersatz der dort als Testflüssigkeit angegebenen 0,9 prozentigen Natriumchloridlösung durch eine einprozentige Calciumformiatlösung bestimmt. Die Methode wird im Kapitel Testmethoden näher beschrieben. Bei Produkten, die nach dem Verfahren der Gelpolymerisation hergestellt sind, beträgt die Aufnahmekapazität bevorzugt mehr als 10 g/g, besonders bevorzugt mehr als 15 g/g und insbesondere bevorzugt ist sie größer als 20 g/g. Bei Produkten, die nach dem Verfahren der Inversen Suspensionspolymerisation hergestellt sind, ist die nach dem gleichen Verfahren ermittelte Aufnahmekapazität bevorzugt größer als 5 g/g, besonders bevorzugt größer als 10 g/g und insbesondere größer als 15 g/g. Die superabsorbierenden Polymere sind bezüglich ihrer Aufnahmekapazität bevorzugt so beschaffen und in der Trockenmischung so dosiert, dass sie zwischen 10 und 40 Gew. %, bevorzugt zwischen 15 und 35 Gew. %, besonders bevorzugt zwischen 20 und 30 Gew. % der zur Trockenmischung hinzugefügten Wassermenge aufnehmen können. Sowohl die anionischen als auch die kationischen superabsorbierenden Copolymere sind in der Trockenmischung von 0,02 bis 2,0 Gew. % enthalten, bevorzugt von 0,1 bis 1,5 Gew. %, besonders bevorzugt von 0,2 bis 1,0 Gew. %. Gegenüber den kationischen superabsorbierenden Copolymeren sind die anionischen superabsorbierenden Copolymere bevorzugt.

Die superabsorbierenden Copolymere halten Wasser, bzw. auch calciumionenhaltige Salzlösungen wie sie in den Baustoffmischungen vorliegen, in Mikrobereichen als Hydrogel fest. Durch den Einsatz von im Vergleich zu den anderen Komponenten der Baustoffmischung recht geringen Mengen der relativ kostengünstigen, erfindungsgemäßen superabsorbierenden Copolymere lässt sich die Menge an (Anmach)wasser und damit auch das Volumen der einsatzfertigen Baustoffmischung wesentlich steigern.

Die erfindungsgemäßen superabsorbierenden Copolymere enthaltenden Trockenmischungen, bzw. die durch Zugabe von Wasser entstehenden Baustoffmischungen haben dadurch den Vorteil, dass sie besonders ergiebig und wirtschaftlich vorteilhaft sind.

In den erfindungsgemäßen Trockenmischungen können noch weitere übliche Zusätze wie Luftporenbildner, Entschäumer, Polyacrylamide, Verdicker auf Acrylatbasis, funktionelle Schichtsilikate, für zementöse Systeme übliche Fließmittel wie beispielsweise Polycarboxylatether (PCE), Melamin Formaldehyd Sulfonate (MFS), β-Naphthalin Formaldehyd Sulfonate (BNS) und Fasern wie Cellulosefasern oder synthetische Fasern (z.B. Aramidfasern) enthalten sein.

In einer speziellen Ausführungsform der Erfindung liegen in den erfindungsgemäßen Trockenmischungen vor,

g) 0,1 bis 1,5 Gewichtsprozent eines wasserlöslichen, sulfogruppenhaltigen Copolymers, aufweisend

g-i) 3 bis 96 Molprozent Struktureinheiten der allgemeinen Formel (I)

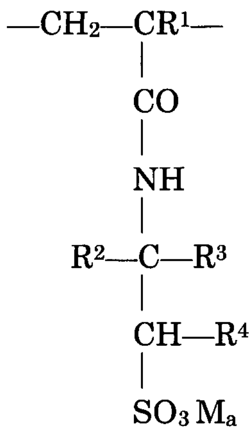

(I)

worin

$R^1$ die vorstehend genannte Bedeutung hat,
$R^2$, $R^3$, $R^4$ jeweils die vorstehend genannten Bedeutungen haben,

M und a die vorstehend genannten Bedeutungen haben,

g-ii) 3 bis 96 Molprozent Struktureinheiten der allgemeinen Formel (II)

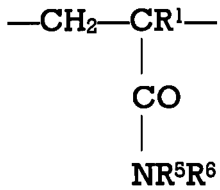

(II)

worin

$R^1$ die vorstehend genannte Bedeutung hat,
$R^5$ und $R^6$ jeweils die vorstehend genannten Bedeutungen haben,

und mindestens eine weitere Struktureinheit ausgewählt aus

g-iii) 0,001 bis 10 Molprozent Struktureinheiten der allgemeinen Formel (IV)

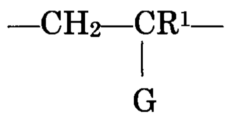

(IV)

worin

$R^1$ die vorstehend genannte Bedeutung hat,
G gleich oder verschieden ist und durch $-COO(C_nH_{2n}O)_p-R^{11}$ und/oder $-(CH_2)_q-O(C_nH_{2n}O)_p-R^{11}$ repräsentiert wird,
$R^{11}$ gleich oder verschieden ist und durch

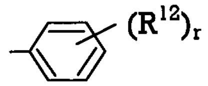

und/oder
einen ungesättigten oder gesättigten, linearen oder verzweigten aliphatischen Alkylrest mit 10 bis 40 C-Atomen repräsentiert wird,

$R^{12}$ gleich oder verschieden ist und durch Wasserstoff, eine $C_1$- bis $C_6$-Alkylgruppe, eine Arylalkylgruppe mit $C_1$- bis $C_{12}$-Alkyl- und $C_6$- bis $C_{14}$-Arylrest repräsentiert wird,
n gleich oder verschieden ist und durch eine ganze Zahl von 2 bis 4 repräsentiert wird,
p gleich oder verschieden ist und durch eine ganze Zahl von 0 bis 200 repräsentiert wird,
q gleich oder verschieden ist und durch eine ganze Zahl von 0 bis 20 repräsentiert wird,
r gleich oder verschieden ist und durch eine ganze Zahl von 0 bis 3 repräsentiert wird, und

g-iv) 0,1 bis 30 Molprozent der Struktureinheiten der allgemeinen Formel (V)

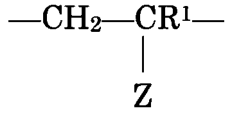

(V)

worin

$R^1$ die vorstehend genannte Bedeutung hat,
Z durch $-(CH_2)_q-O(C_nH_{2n}O)_p-R^{13}$ repräsentiert wird,
n, p und q die vorstehend genannten Bedeutungen haben,
$R^{13}$ gleich oder verschieden ist und durch Wasserstoff und/oder einen $C_1$- bis $C_4$-Alkylrest repräsentiert wird.

Im Folgenden sollen die wasserlöslichen sulfogruppenhaltigen Copolymere g) näher beschrieben werden. Die Copolymere g) stellen weitere Wasserretentionsmittel dar und sind von den vorstehend beschriebenen Wasserretentionsmitteln auf Polysaccharidbasis und den ebenfalls vorstehend beschriebenen, bevorzugt wasserunlöslichen anionischen, superabsorbierenden Copolymeren $f_a$) zu unterscheiden. Die wasserlöslichen sulfogruppenhaltigen Copolymere werden in der Trockenmischung bevorzugt in Pulverform eingesetzt. Sie enthalten Struktureinheiten gemäß den allgemeinen Formeln I und II, wobei mindestens eine weitere Struktureinheit ausgewählt aus den Struktureinheiten IV und V enthalten ist. Dies bedeutet im einzelnen, dass die Copolymere Struktureinheiten gemäß den allgemeinen Formeln I, II, IV oder Struktureinheiten gemäß den allgemeinen Formeln I, II, V oder Struktureinheiten gemäß den allgemeinen Formeln I, II, IV, V enthalten können. Der Mengenanteil der Struktureinheiten gemäß den allgemeinen Formeln I und II im wasserlöslichen sulfogruppenhaltigen Copolymer beträgt jeweils zwischen 3 und 96 Molprozent, für die Struktureinheiten gemäß der allgemeinen Formel IV zwischen 0,001 und 10 Molprozent und für die Struktureinheiten gemäß der allgemeinen Formel V zwischen 0,1 und 30 Molprozent. Vorzugsweise verwendete Copolymere enthalten 30 bis 80 Molprozent Struktureinheiten gemäß der allgemeinen Formel I und 5 bis 50 Molprozent gemäß der allgemeinen Formel II, weiterhin 0,1 bis 5 Molprozent Struktureinheiten gemäß der allgemeinen Formel IV oder 0,2 bis 15 Molprozent Struktureinheiten gemäß der allgemeinen Formel V, oder auch beide Struktureinheiten IV und V in den entsprechenden, vorstehend genannten Mengen.

Die Struktureinheit gemäß der allgemeinen Formel I leitet sich bevorzugt ab von Monomeren wie 2-Acrylamido-2-methylpropansulfonsäure, 2-Methacrylamido-2-methylpropansulfonsäure, 2-Acrylamidobutansulfonsäure, 2-Acrylamido-2,4,4-trimethylpentansulfonsäure und jeweils deren Salzverbindungen. Besonders bevorzugt sind 2-Acrylamido-2-methylpropansulfonsäure und dessen Salzverbindungen.

Die Struktureinheit gemäß der allgemeinen Formel II leitet sich bevorzugt ab von Monomeren wie Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid ab.

Die Struktureinheit gemäß der allgemeinen Formel IV leitet sich bevorzugt ab von Monomeren wie Tristyrylphenol-polyethylenglykol-1100-methacrylat, Behenylpolyethylenglykol-1100-methacrylat, Stearylpolyethylenglykol-1100-methacrylat, Tristyrylphenol-polyethylenglykol-1100-acrylat, Tristyrylphenol-polyethenglykol-1100-monovinylether, Behenylpolyethenglykol-1100-monovinylether, Stearylpolyethenglykol-1100-monovinylether, Tristyrylphenol-polyethylenglykol-1100-vinyloxy-butylether, Behenylpolyethylenglykol-1100-vinyloxy-butylether, Tristyrylphenolpolyethylenglykol-block-propylenglykolallylether, Behenylpolyethylenglykol-block-propylenglykolallylether, Stearylpolyethylenglykol-block-propylenglykolallylether.

Die Struktureinheit gemäß der allgemeinen Formel V leitet sich bevorzugt ab von Monomeren wie Allylpolyethylenglykol-(350 bis 2000), Methylpolyethylenglykol-(350 bis 2000)-monovinylether, Polyethylenglykol-(500 bis 5000)-vinyloxy-butylether, Polyethylenglykol-block-propylenglykol-(500 bis 5000)-vinyloxy-butylether und Methylpolyethylenglykol-block-propylenglykolallylether.

Die Herstellung der erfindungsgemäßen Copolymere erfolgt in an sich bekannter Weise durch Verknüpfung der sich von den entsprechenden Struktureinheiten I, II, IV und V ableitenden Monomere durch radikalische, Substanz-, Lösungs-, Gel-, Emulsions-, Dispersions- oder Suspensionspolymerisation. Es hat sich als vorteilhaft erwiesen, die Anzahl der Struktureinheiten so einzustellen, dass die wasserlöslichen sufogruppenhaltigen Copolymere g) ein zahlenmittleres Molekulargewicht von 50.000 bis 20.000 000 aufweisen.

Die wasserlöslichen, sulfogruppenhaltigen Copolymere g) sind in der Trockenmischung bevorzugt von 0,1 bis 1,5 Gew. % enthalten, besonders bevorzugt von 0,3 bis 1,2 Gew. % und insbesondere bevorzugt von 0,5 bis 1,0 Gew. %.

In einer weiteren speziellen Ausführungsform der Erfindung liegen in den erfindungsgemäßen Trockenmischungen vor,

h) 0,1 bis 1,5 Gewichtsprozent eines wasserlöslichen kationischen Copoymers, aufweisend

h-i) 5 bis 60 Molprozent Struktureinheiten der allgemeinen Formel (VI),

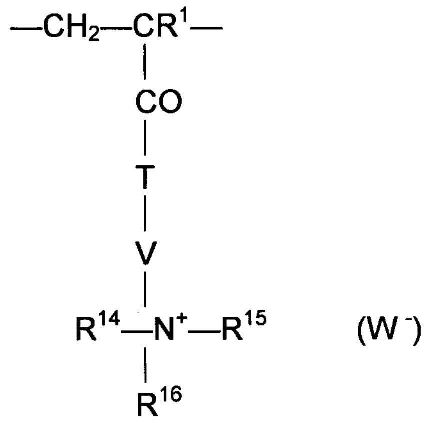

(VI)

worin

| | |
|---|---|
| $R^1$ | die vorstehend genannte Bedeutung hat, |
| $R^{14}$ und $R^{15}$ | jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden, |
| $R^{16}$ | gleich oder verschieden ist und durch einen mit $R^{14}$ oder $R^{15}$ identischen Substituenten, $-(CH_2)_x-SO_3L_a$, |

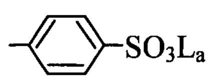

und/oder

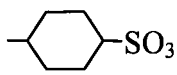

$L_a$, repräsentiert wird,

| | |
|---|---|
| L | gleich oder verschieden ist und durch ein ein- oder zweiwertiges Metallkation, Ammoniumkation und/oder quaternäres Ammoniumkation $(NR_1R_{14}R_{15}R_{16})^+$, repräsentiert wird, |
| a | gleich oder verschieden ist und durch ½ und/oder 1 repräsentiert wird, |
| T | gleich oder verschieden ist und durch Sauerstoff, -NH und/oder -$NR^{14}$, repräsentiert wird, |
| V | gleich oder verschieden ist und durch $-(CH_2)_m-$, |

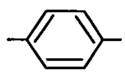 ,

und/oder

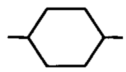

repräsentiert wird,

| | |
|---|---|
| m | gleich oder verschieden ist und durch eine ganze Zahl von 1 bis 6 repräsentiert wird, |
| $W^-$ | gleich oder verschieden ist und durch ein Halogenatom, $C_1$-bis $C_4$-Alkylsulfat und/oder $C_1$- bis $C_4$-Alkylsulfonat, repräsentiert wird, |

h-ii) 20 bis 80 Molprozent einer Struktureinheit, welche durch folgende allgemeine Formeln (VIIa) und/oder (VIIb) repräsentiert wird:

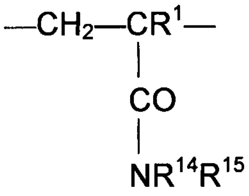

(VIIa)

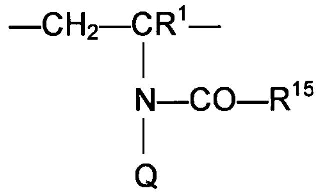

(VIIb)

worin

| | |
|---|---|
| Q | gleich oder verschieden ist und durch Wasserstoff und/oder $-CHR^{14}R^{17}$ repräsentiert wird, |
| $R^1$, $R^{14}$, $R^{15}$ | jeweils mit der Maßgabe die vorstehend genannten Bedeutungen haben, dass im Falle von Q ungleich Wasserstoff $R^{14}$ und $R^{15}$ in der allgemeinen Formel (VIIb) zusammen für eine $-CH_2-(CH_2)_y-$ Methylengruppe stehen können, so dass die allgemeine Formel (VIIb) gemäß folgender Struktur vorliegt: |

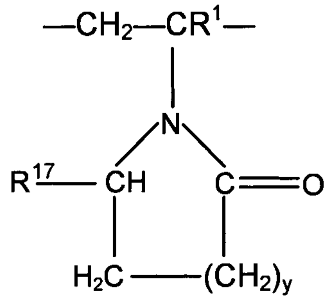

worin

$R^{17}$ gleich oder verschieden sowie repräsentiert durch ein Wasserstoffatom, einen $C_1$- bis $C_4$-Alkylrest, eine Carbonsäuregruppe und/oder eine Carboxylatgruppe -$COOL_a$ ist, wobei y gleich oder verschieden ist und durch eine ganze Zahl von 1 bis 4 repräsentiert wird, sowie L und a jeweils die vorstehend genannten Bedeutungen haben,

h-iii) 0,01 bis 3 Molprozent Struktureinheiten der allgemeinen Formel (VIII)

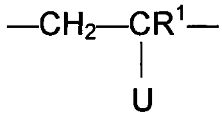

(VIII)

worin

U gleich oder verschieden ist und durch $-COO(C_nH_{2n}O)_s-R^{18}$, und/oder $-(CH_2)_q-O(C_nH_{2n}O)_s-R^{18}$ repräsentiert wird,

n gleich oder verschieden ist und durch eine ganze Zahl zwischen 2 und 4 repräsentiert wird,

s gleich oder verschieden ist und durch eine ganze Zahl zwischen 1 und 200 repräsentiert wird,

q gleich oder verschieden ist und durch eine ganze Zahl zwischen 0 und 20 repräsentiert wird,

$R^{18}$ gleich oder verschieden ist und durch

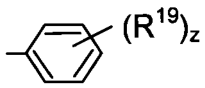

repräsentiert wird,

$R^{19}$ gleich oder verschieden ist und durch Wasserstoff, eine $C_1$- bis $C_6$-Alkylgruppe, und/oder eine Arylalkylgruppe mit $C_1$- bis $C_{12}$-Alkyl-sowie $C_6$- bis $C_{14}$-Arylrest repräsentiert wird, z gleich oder verschieden ist und durch eine ganze Zahl zwischen 1 und 3 repräsentiert wird und

$R^1$ die vorstehend genannte Bedeutung hat.

Im Folgenden sollen die kationischen Copolymere h) näher beschrieben werden.

Die wasserlöslichen kationischen Copolymere h) stellen weitere Wasserretentionsmittel dar und sind von den vorstehend beschriebenen Wasserretentionsmitteln auf Polysaccharidbasis und den ebenfalls vorstehend beschriebenen, bevorzugt wasserunlöslichen kationischen, superabsorbierenden Copolymeren $f_b$) zu unterscheiden. Die wasserlöslichen kationischen Copolymere werden in der Trockenmischung bevorzugt in Pulverform eingesetzt. Mittels dieser wasserlöslichen kationischen Copolymere können auch im Falle von hohen Salzfrachten erhebliche Verbesserungen der Wasserretention in wässrigen Baustoffsystemen auf der Basis hydraulischer Bindemittel, wie Zement erzielt werden. Die Rheologiemodifizierung, das Wasserrückhaltevermögen, die Klebrigkeit und das Verarbeitungsprofil lassen sich zudem je nach Zusammensetzung der Copolymere optimal für die jeweilige Anwendung einstellen.

Die für die Anwendung der Copolymere in wässrigen Baustoffanwendungen erforderliche gute Wasserlöslichkeit wird insbesondere durch die kationische Struktureinheit gemäß der allgemeinen Formel VI gewährleistet. Die neutrale Struktureinheit gemäß den allgemeinen Formeln VIIa und/oder VIIb wird hauptsächlich für den Aufbau der Hauptkette und das Erreichen der geeigneten Kettenlängen benötigt, wobei durch die hydrophoben Struktureinheiten gemäß der allgemeinen Formel VIII eine assoziative Verdickung ermöglicht wird, die für die angestrebten Produkteigenschaften vorteilhaft ist.

In den kationischen Copolymeren h) geht die Struktureinheit gemäß der allgemeinen Formel VI bevorzugt hervor aus der Polymerisation von einer oder mehrerer Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze, [3-(Methacryloylamino)-propyl]-trimethylammoniumsalze N-(3-Sulfopropyl)-N-methyacryloxyethyl-N,N-dimethyl-ammonium-betain, N-(3-Sulfopropyl)-N-methyacrylamidopropyl-N,N-dimethyl-ammonium-betain und/oder 1-(3-Sulfopropyl)-2-vinyl-pyridinium-betain. Die genannten Salze liegen bevorzugt als Halogenide oder Methosulfate vor. Besonders bevorzugt sind [3-(Acryloylamino)-propyl]-trimethylammoniumsalze, und / oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC).

Es ist prinzipiell praktikabel, bis zu ca. 15 Molprozent der Struktureinheiten gemäß der allgemeinen Formel VI

durch weitere kationische Struktureinheiten zu ersetzen, die sich von N,N-Dimethyl-diallyl-ammoniumchhlorid und N,N-Diethyl-diallylammoniumchlorid ableiten.

Bevorzugt geht die Struktureinheit gemäß der allgemeinen Formel VIIa hervor aus der Polymerisation von einer oder mehreren der Monomerspezies Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur VIIb sind N-Methyl-N-vinylformamid, N-Methyl-N-vinylacetamid, N-Vinylpyrrolidon, N-Vinylcaprolactam und/oder N-Vinylpyrrolidon-5-carbonsäure.

Bevorzugt geht die Struktureinheit gemäß der allgemeinen Formel VIII aus der Polymerisation von einer oder mehreren der Monomerspezies Tristyrylphenolpolyethylenglykol-1100-methacrylat, Tristyrylphenol-polyethylenglykol-1100-acrylat, Tristyrylphenol-polyethenglykol-1100-monovinylether, Tristyrylphenolpolyethylenglykol-1100-vinyloxybutylether und/oder Tristyrylphenolpolyethylenglykol-block-propylenglykolallylether, hervor.

In einer bevorzugten Ausführungsform der Erfindung sind die Struktureinheiten gemäß der allgemeinen Formel VI mit 15 bis 50 Molprozent, gemäß der allgemeinen Formel VIIa und/oder VIIb mit 30 bis 75 Molprozent und gemäß der allgemeinen Formel VIII mit 0,03 bis 1 Molprozent in dem Copolymer enthalten.

Neben den vorstehend genannten Strukturelementen gemäß den allgemeinen Formeln VI, VIIa und/oder VIIb, und VIII können noch bis zu 40 Molprozent weitere Strukturelemente in den Copolymeren enthalten sein, die sich bevorzugt von [2-(Methacryloyl-oxy)-ethyl)]-diethylamin, [3-(Acryloylamino)-propyl)]-dimethylamin und/oder [3-(Methacryloylamino)-propyl)]-dimethylamin ableiten. Die Herstellung der erfindungsgemäßen Copolymere h) erfolgt bevorzugt in an sich bekannter Weise durch Verknüpfung der die Struktureinheiten gemäß den allgemeinen Formeln VI, VIIa und/oder VIIb, und VIII bildenden Monomere und gegebenenfalls weiterer Monomere durch radikalische Polymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. Zweckmäßigerweise erfolgt die Herstellung durch Gelpolymerisation in wässriger Phase.

Es hat sich als vorteilhaft erwiesen, die Anzahl der Struktureinheiten so einzustellen, dass die wasserlöslichen kationischen Copolymere h) ein zahlenmittleres Molekulargewicht von 50.000 bis 20.000 000 aufweisen.

Die wasserlöslichen kationischen Copolymere h) sind in der Trockenmischung bevorzugt von 0,1 bis 1,5 Gew. % enthalten, besonders bevorzugt von 0,3 bis 1,2 Gew. % und inbesondere bevorzugt von 0,5 bis 1,0 Gew. %.

Durch Vermischen der erfindungsgemäßen Trockenmischungen mit Wasser erhält man einsatzfertige Baustoffmischungen. Diese haben im Vergleich zu keine superabsorbierende Copolymere enthaltenden Trockenmischungen einen größeren Wasseranspruch. Ansonsten bestimmt sich der Wasseranspruch der Baustoffsysteme nach Art und Menge der Trockenmischungskomponenten und den jeweiligen Anforderungen der Verwendung.

Die Verwendung der erfindungsgemäßen Baustoffmischung erfolgt bevorzugt als Fliesenkleber gemäß DIN EN 12004, als Dichtschlämme, Fugenfüller gemäß EN 13888, Reparaturmörtel gemäß EN 1504, Spachtelmasse, Parkettkleber, Verlaufsmasse, Putz gemäß EN 998-1 und als Klebe-, und Armierungsmörtel für Wärmedämmverbundsysteme (WDVS) gemäß EN 13499 und EN 13500. Unter Reparaturmörteln versteht man zum Beispiel Mörtel zur Reparatur oder Ersatz von beschädigtem Beton. Spachtelmassen dienen zum Beispiel zur abschließenden Bearbeitung eines Untergrunds um ebene Flächen (Wände oder Decken) zu erhalten. Wärmedämmverbundsysteme sind isolierende Systeme, die meist unter Verwendung von werkmäßig hergestellten Wärmedämmstoffen auf der Baustelle zum Einsatz kommen. Zur Befestigung verwendet man Klebemörtel, falls eine mechanische Befestigung (Armierung) angebracht werden soll, spricht man von einem Armierungsmörtel.

## Beispiele

I Testmethoden

Bestimmung der Aufnahmekapazität der superabsorbierenden Copolymere

Die Bestimmung der Aufnahmekapazität der erfindungsgemäßen Superabsorber erfolgt gemäß der für die Hygieneindustrie entwickelten Norm edana 440.2-02 unter Abwandlung der Vorschrift, d.h. Ersatz der dort als Testflüssigkeit angegebenen 0,9 prozentigen Natriumchloridlösung durch eine einprozentige Calciumformiatlösung. Diese auch "Teebeuteltest" genannte Methode wird ausgeführt, indem man eine definierte Menge (etwa 200 mg) superabsorbierendes Polymer in einen Teebeutel einschweißt und 30 Minuten in eine einprozentige Calciumformiatlösung taucht. Anschließend lässt man die Teebeutel fünf Minuten lang abtropfen und wiegt sie aus. Ein Teebeutel ohne superabsorbierendes Polymer wird als Blindwert mitgeprüft. Zur Berechnung der Aufnahmekapazität verwendet man folgende Formel:

kapazität verwendet man folgende Formel:

$$\text{Aufnahmekapazität} = (\text{Auswaage} - \text{Blindwert} - \text{Einwaage}) / \text{Einwaage} \quad (g/g)$$

Bestimmung des Extrahierbaren Anteils der superabsorbierenden Copolymere

Der extrahierbare Anteil wird durch eine Extraktion des superabsorbierenden Copolymeren in 0,9 prozentiger Natriumchloridlösung mit anschließender Total Organic Content (TOC-Bestimmung) durchgeführt. 1,0 g des superabsorbierenden Polymeren werden dazu in einem Liter 0,9 prozentiger Natriumchloridlösung sechzehn Stunden stehen gelassen und anschliessend abfiltriert. Nach Bestimmung des TOC-Gehalts des Filtrates berechnet man über den bekannten Kohlenstoffgehalt des superabsorbierenden Polymeren den extrahierbaren Anteil.

II Synthese superabsorbierender Copolymere

Copolymer 1 (anionisches superabsorbierendes Copolymer)

In einem 2 1-Dreihalskolben mit Rührer und Thermometer wurden 160 g Wasser vorgelegt und anschließend nacheinander 352,50 g (0,74 mol, 28 Mol-%) 2-Acrylamido-2-methylpropansulfonsäure Natriumsalz (50 Gew.-%ige Lösung in Wasser), 286,40 g (2,0 mol, 72 Mol-%) Acrylamid (50 Gew.-%ige Lösung in Wasser) und 0,3 g (0,0021 mol, 0,08 Mol-%) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b · t · h) 15 cm · 10 cm ·20 cm umgefüllt und anschließend wurden nacheinander 16 g einprozentige 2,2'-Azo-bis-(2-amidinopropan)-dihydrochlorid Lösung, 20 g einprozentige Natriumperoxodisufat Lösung 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.

Das erhaltene Gelgranulat von Copolymer 1 wurde gleichmäßig auf Trockengitter verteilt und in einem Umlufttrockenschrank bei ca. 120 bis 140 °C bis zur Gewichtskonstanz getrocknet. Es wurden ca. 375 g eines weißen, harten Granulats erhalten, welches mit Hilfe einer Zentrifugalmühle in einen pulverförmigen Zustand überführt wurde. Der mittlere Teilchendurchmesser des Polymerpulvers betrug 30 bis 50 μm und der Anteil an Partikeln, die ein Sieb der Maschengröße 63 μm nicht passieren, war kleiner als 2 Gew. %.

Die Aufnahmekapazität des Copolymers 1 in einprozentiger Calciumformiat Lösung beträgt 32 g/g und der extrahierbare Anteil 7,0 Prozent. Das Produkt hat sich als scherstabil erwiesen und weist insbesondere keine Nachverdickung, z.B. im Fliesenkleber auf.

Das Copolymer 1 erreicht innerhalb von vier Minuten seine maximale Wasseraufnahmekapazität, was ungefähr den üblichen Anrührzeiten zementöser Baustoffmischungen entspricht.

Copolymer 2 (kationisches superabsorbierendes Copolymer)

In einem 2 1-Dreihalskolben mit Rührer und Thermometer wurden 276,5 g Wasser vorgelegt. Anschließend wurden nacheinander 246,90 g (0,72 mol, 27 Mol-%) DIMAPA-Quat (60 Gew.-%ige Lösung in Wasser), 262,60 g (1,84 mol, 73 Mol-%) Acrylamid (50 Gew.-%ige Lösung in Wasser) und 0,3 g (0,0021 mol, 0,08 Mol-%) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b · t · h) 15 cm · 10 cm 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat-Lösung 0,7 g einprozentige Rongalit C-Lösung, 16,2 g 0,1 %ige tert.-Butylhydroperoxid-Lösung und 2,5 g 0,1 %ige Fe(II)sulfat-Heptahydrat zugesetzt. Die Polymerisation wurde durch Bestrahlen mit UV-Licht (zwei Philips Röhren; Cleo Performance 40 W) gestartet. Nach ca. zwei Stunden wurde das harte Gel aus dem Plastikbehälter genommen und die weitere Aufarbeitung erfolgte in gleicher Weise wie vorstehend für das Copolymer 1 beschrieben. Es wurden ca. 375 g eines weißen, harten Granulats erhalten, welches mit Hilfe einer Zentrifugalmühle in einen pulverigen Zustand überführt wurde. Der mittlere Teilchendurchmesser des Polymerpulvers betrug 30 bis 50 μm, der Anteil an Partikeln, die ein Sieb der Maschengröße 63 μm nicht passieren war kleiner als 2 Gew. %. Die

Aufnahmekapazität des Copolymers 2 in einprozentiger Calciumformiat Lösung beträgt 29 g/g und der extrahierbare Anteil 9,0 Prozent.

Vergleichspolymer 1

Das Vergleichspolymer 1 Luquasorb® 3746 SX der Firma BASF AG ist ein vernetztes teilneutralisiertes Natriumpolyacrylat. In einer einprozentigen Calciumformiat Lösung kollabiert das Gel, das heißt es tritt ein fast vollkommener Verlust der Absorptionskapazität ein.

Vergleichspolymer 2

Beim Vergleichspolymer 2 Luquasorb® AF 2 der Firma BASF AG handelt es sich um ein vernetztes Copolymer aus Acrylamid und Acrylsäure, wobei die Acrylsäure mit Natriumhydroxid neutralisiert wurde. Das kommerzielle Produkt Luquasorb® AF 2 (1000-3000 μm) wurde mittels einer Zentrifugalmühle so gemahlen, dass der Anteil an Partikeln, die ein Sieb der Maschengröße 63 μm nicht passieren kleiner als 2 Gew. % war. Das Produkt wurde nach dem Verfahren der Gelpolymerisation hergestellt. In einer einprozentigen Calciumformiat Lösung beträgt die Aufnahmekapazität 10 g/g.

III Anwendungstests

Fliesenklebemörtel (Tabelle 1)

Zur Prüfung der Fliesenklebemörtel wird der Test "Abrutschen einer Steinzeugfliese" nach DIN EN 1308 durchgeführt. Bei Erfüllung der Anforderung nach DIN EN 12004, Klasse "T", nämlich ein Abrutsch kleiner als 0,5 mm, wird die Konsistenz der Mischung als für Fliesenkleber praxistauglich angesehen.

In entsprechenden Testreihen wurden jeweils 1 kg der hydraulischen Fliesenklebemörtel der Tabelle 1 mit den entsprechenden Mengen Wasser in einem Normmischer angerührt. Dabei wurde jeweils die maximale Wassermenge bestimmt, die noch eine Konsistenz ergibt, welche die vorstehend genannten Anforderungen an die Standfestigkeit erfüllt. Diese Werte sind in Tabelle 1 als Verhältnis Wasser / Trockenmischung angegeben.

Die Ergebnisse der Prüfungen sind in der Tabelle 1 zusammengefasst.

| **Tabelle 1: Hydraulischer Fliesenklebemörtel** | Komp. | Beispiel 1 | Vergleichsbeispiel 1 | Vergleichsbeispiel 2 |
|---|---|---|---|---|
| Zusammensetzung | | (Gew. %) | (Gew. %) | (Gew. %) |
| CEM II A 42,5 R | a) | 74,83 | 75,56 | 74,83 |
| Silikatischer Leichtfüllstoff, Partikelgröße bis 0,5 mm (Dichte: 400 g/l) | b) | 16,01 | 16,17 | 16,01 |
| Vinylacetat-Ethylen-Copolymerisat [1] (Mindestfilmbildetemperatur: 4 °C) | c) | 3,22 | 3,25 | 3,22 |
| Hydroxypropylmethylcellulose [2] | d) | 0,92 | 0,93 | 0,92 |
| Calciumformiat | e) | 1,74 | 1,76 | 1,74 |
| Copolymer 1 | $f_a$) | 0,96 | 0,00 | 0,00 |
| Vergleichspolymer 1 | | 0,00 | 0,00 | 0,96 |
| Cellulosefaser (200 μm) | | 1,39 | 1,41 | 1,39 |
| Na-Bentonit | | 0,87 | 0,88 | 0,87 |
| $FeSO_4 \cdot 7H_20$ | | 0,05 | 0,05 | 0,05 |
| Testergebnisse | | | | |
| Abrutschtest nach EN 1308 (Anforderung erfüllt) | | < 0,5 mm | < 0,5 mm | < 0,5 mm |
| Wasser / Trockenmischung (g/kg) | | 760 | 560 | 580 |
| Frischmörteldichte (kg/l) | | 1,15 | 1,25 | 1,23 |

(fortgesetzt)

| Tabelle 1: **Hydraulischer Fliesenklebemörtel** | Komp. | Beispiel 1 | Vergleichsbeispiel 1 | Vergleichsbeispiel 2 |
|---|---|---|---|---|
| Ergiebigkeit (Volumen der mit Wasser angerührten Trockenmischung / Masse der Trockenmischung) (l/kg) | | 1,53 | 1,25 | 1,28 |
| Korrigierbarkeit einer Steingutfliese nach 10 Minuten | | gut-mittel | mittelschwer | gut-mittel |
| Hautbildezeit (min) | | 22 | 14 | 22 |
| 1) Vinnapas® RE 5028, Wacker Chemie AG, Burghausen<br>2) Culminal® MHPC 60.000 (die Viskosität einer 2 % Lsg. in Wasser bei Raumtemp. beträgt 60.000 mPas), Fa. Aqualon, Düsseldorf | | | | |

Im Gegensatz zu den Vergleichsbeispielen 1 (ohne Superabsorber) und 2 (mit Vergleichs-superabsorber) liegt die maximale Wassermenge, die man im Falle des erfindungsgemäßen Superabsorbers Copolymer 1 des Beispiels 1 unter Erfüllung der Norm 1308 (Abrutschwiderstand von Fliesenklebemörteln) noch verwenden kann, wesentlich höher. Die Ergiebigkeit ist dementsprechend wesentlich höher. Der Wasseranspruch des Vergleichsbeispiels 2 liegt nahe demjenigen des Vergleichsbeispiels 1 (ohne Superabsorber), d.h. der nicht erfindungsgemäße Superabsorber des Vergleichsbeispiels 2 hat nur eine sehr geringe Wasseraufnahmekapazität.

Die Korrigierbarkeit einer Steingutfliese ist ein Test dafür, wie leicht oder schwer die Lage einer stark Wasser anziehenden Fliese nach Einlage in das Kleberbett nach einem bestimmten Zeitintervall (üblich sind 5, 10 oder 15 Minuten), korrigiert werden kann. Die Korrigierbarkeit nach 10 Minuten ist zumindest gegenüber dem Vergleichsbeispiel 1 verbessert.

Die Hautbildezeit ist ebenfalls gegenüber dem Vergleichbeispiel 1 verbessert und trotz der höheren Anmachwassermenge des Beispiels 1 wurde eine ähnliche Hautbildezeit wie beim Vergleichsbeispiel 2 gefunden. Die Hautbildezeit ist definiert als die Zeit, nach welcher sich nach dem Anmischen des Fliesenklebemörtels eine Haut auf dem Klebersteg bildet. Sie wird visuell bestimmt. Der Luftporengehalt der Fliesenkleber der Tabelle 1 betrug zwischen 21 und 24 Prozent.

Bei einem konstanten Massenverhältnis Wasser / Trockenmischung von 360 g/kg, bei welchem die Anforderungen an den Abrutschwiderstand der Fliese noch erfüllt sind, wurden ebenfalls für Fliesenklebemörtel in einer zweiten Versuchsreihe die Haftzugfestigkeiten nach EN 1348 bei verschiedenen Lagerbedingungen und die klebeoffene Zeit bestimmt. Die Tabelle 2 gibt eine Übersicht über die entsprechenden Ergebnisse.

| Tabelle 2: Hydraulischer Fliesenklebemörtel | Komp. | Bsp. 2 | Bsp. 3 | Bsp. 4 | Bsp. 5 | Vgl. Bsp. 3 | Vgl. Bsp. 4 | Vgl. Bsp. 5 |
|---|---|---|---|---|---|---|---|---|
| Zusammensetzung | | Gew. % | Gew. % | Gew. % | Gew. % | Gew. % | Gew. % | Gew. % |
| Portlandzement CEM I 52,5 | a) | 37 | 37 | 37 | 37 | 37 | 37 | 37 |
| Quarzsand 0 bis 0,5 mm | b) | 53,6 | 53,65 | 53,8 | 53,75 | 52,0 | 53,5 | 53,05 |
| Kalksteinmehl | b) | 6 | 6 | 6 | 6 | 6 | 6 | 6 |
| Vinylacetat-Ethylen-Copolymerisat [1)] (Mindestfilmbildetemp. : 4 °C) | c) | 1,5 | 1,5 | 1,5 | 1,5 | 3 | 1,5 | 1,5 |
| Hydroxypropylmethylcellulose [3)] | d) | 0,5 | 0,4 | 0,4 | 0,3 | 0,6 | 0,6 | 0,6 |
| Stärkeether [4)] | d) | 0,1 | 0,1 | 0,1 | 0,1 | 0,1 | 0,1 | 0,1 |
| Beschleuniger (Calciumformiat) | e) | 0,7 | 0,7 | 0,7 | 0,7 | 0,7 | 0,7 | 0,7 |
| Copolymer 1 (anionisch) | $f_a$) | 0,3 | 0,45 | 0 | 0 | 0 | 0 | 0 |
| Copolymer 2 (kationisch) | $f_b$) | 0 | 0 | 0,3 | 0,45 | 0 | 0 | 0 |
| Vergleichspolymer 1 | | 0 | 0 | 0 | 0 | 0 | 0 | 0,45 |
| Cellulosefaser | | 0,3 | 0,2 | 0,2 | 0,2 | 0,6 | 0,6 | 0,6 |
| Wasser / Trockenmischung (g/kg) | | 360 | 360 | 360 | 360 | 360 | 360 | 360 |
| Testergebnisse | | | | | | | | |
| Haftzugfestigkeiten gemäß EN1348 | | N/mm$^2$ | N/mm$^2$ | N/mm$^2$ | N/mm$^2$ | N/mm$^2$ | N/mm$^2$ | N/mm$^2$ |
| Trockenlagerung: 28 Tage bei Raumtemperatur | | 1.13 | 1.28 | 1,10 | 1,30 | 1.05 | 0.72 | 0,75 |
| Nasslagerung: 7 Tage trocken, 21 Tage feucht (jeweils bei Raumtemperatur (RT)) | | 1.50 | 1.49 | 1,50 | 1,48 | 1.61 | 1.60 | 1,52 |
| Wärmelagerung: 14 Tage bei RT, 14 Tage bei 70 °C, 1 Tag bei RT | | 1.12 | 1.22 | 1,15 | 1,17 | 1.17 | 0.78 | 0,75 |
| Klebeoffene Zeit gemäß EN 12004 (nach 30 min) | | 0.65 | 0.82 | 0,57 | 0,79 | 0.55 | 0.21 | 0,25 |

[1)] Vinnapas® RE 5028, Wacker Chemie AG, Burghausen
[3)] Culminal® MHPC 20.000 (die Viskosität einer 2 % Lsg. in Wasser bei Raumtemp. beträgt 20.000 mPas), Fa. Aqualon, Düsseldorf
[4)] Tylovis® SE7, Fa. SE Tylose GmbH & Co. KG, Wiesbaden

Durch den Einsatz der erfindungsgemäßen anionischen (Bsp. 2 und 3) und der erfindungsgemäßen kationischen (Bsp. 4 und 5) superabsorbierenden Copolymere konnte bei gleichem Verhältnis von Wasser zu Trockenmischung die Menge an redispergierbarem Polymerpulver (Vinylacetat-Ethylen-Copolymerisat) halbiert werden, ohne dass es zu einer Verschlechterung der Haftzugfestigkeiten wie bei den Vergleichsbeispielen 4 und 5 kam. Insbesondere bei Trockenlagerung, Wärmelagerung und bei der Prüfung der Haftzugwerte nach 30 Minuten (Klebeoffene Zeit) verschlechtern sich die Haftzugwerte für die Vergleichsbeispiele 4 und 5 wesentlich. Das Vergleichspolymer 1 (Vergleichsbeispiel 5) weist also keine erfindungsgemäße Wirkung auf. Vergleichsbeispiel 3 zeigt, dass ähnlich gute Haftzugfestigkeiten wie in den erfindungsgemäßen Beispielen nur durch den Einsatz hoher und damit wirtschaftlich ungünstiger Mengen an redispergierbarem Polymerpulver erreicht werden können. Als weiterer Vorteil konnten in den erfindungsgemäßen Beispielen die Einsatzmengen des Celluloseethers etwas reduziert werden. Die Ergebnisse der Klebeoffenen Zeit (Bsp. 2 bis 5) sind etwas besser im Vergleich zum Vergleichsbeispiel 3 mit hohem Einsatz an redispergierbarem Polymerpulver, gegenüber den Vergleichsbeispielen 4 und 5 sind sie deutlich verbessert.

Wärmedämmverbundsysteme (Tabelle 3)

Für WDVS - Systeme wurden ebenfalls die Haftzugfestigkeiten und die Klebeoffene Zeit bestimmt. Die Ergebnisse sind in der Tabelle 3 zusammengefasst.

| **Tabelle 3: WDVS - System** | Komp. | Bsp. 6 | Bsp. 7 | Bsp. 8 | Bsp. 9 | Vgl. Bsp. 6 | Vgl. Bsp. 7 |
|---|---|---|---|---|---|---|---|
| Zusammensetzung | | Gew. % | Gew. % | Gew. % | Gew. % | Gew. % | Gew. % |
| Portlandzement (z.B. CEM I 42,5 R) | a) | 25,0 | 25,0 | 25,0 | 25,0 | 25,0 | 25,0 |
| Quarzsand oder Kalksteinmehl (Partikelgröße bis 0,5 mm) | b) | 72,5 | 72,35 | 72,5 | 72,35 | 71,8 | 72,8 |
| Vinylacetat-Ethylen-Copolymerisat [1] (Mindestfilmbildetemp.: 4 °C) | c) | 1,0 | 1,0 | 1,0 | 1,0 | 2,0 | 1,0 |
| Hydroxypropylmethylcellulose [3] | d) | 0,2 | 0,2 | 0,2 | 0,2 | 0,2 | 0,2 |
| Calciumformiat | e) | 1,0 | 1,0 | 1,0 | 1,0 | 1,0 | 1,0 |
| Copolymer 1 (anionisch) | $f_a$) | 0,3 | 0,4 | 0 | 0 | 0 | 0 |
| Copolymer 2 (kationisch) | $f_b$) | 0 | 0 | 0,3 | 0,4 | 0 | 0 |
| Wasser / Trockenmischung (g/kg) | | 250 | 250 | 250 | 250 | 250 | 250 |
| Haftzugfestigkeiten gemäß EN 1348 | | $N/mm^2$ | $N/mm^2$ | $N/mm^2$ | $N/mm^2$ | $N/mm^2$ | $N/mm^2$ |
| Trockenlagerung: 28 Tage bei Raumtemperatur | | 0.8 | 0.85 | 0,75 | 0,8 | 0.7 | 0.3 |
| Nasslagerung: 7 Tage trocken, 21 Tage feucht (jeweils bei Raumtemperatur (RT)) | | 0.6 | 0.6 | 0,6 | 0,55 | 0.6 | 0.6 |
| Wärmelagerung: 14 Tage bei RT, 14 Tage bei 70 °C, 1 Tag bei RT | | 0.6 | 0.7 | 0,6 | 0,6 | 0.5 | 0.2 |
| Klebeoffene Zeit gemäß EN 12004 (nach 20 min) | | 0.5 | 0.6 | 0,5 | 0,5 | 0.5 | 0.2 |
| [1] Vinnapas® RE 5028, Fa. Wacker Chemie AG, Burghausen<br>[3] Culminal® MHPC 20.000 (die Viskosität einer 2 % Lsg. in Wasser bei Raumtemp. beträgt 20.000 mPas), Fa. Aqualon, Düsseldorf | | | | | | | |

In den erfindungsgemäßen WDVS Klebe- und Armierungsmörteln bleibt bei Einsatz des erfindungsgemäßen anionischen Copolymers 1 (Bsp. 6 und 7) bzw. des erfindungsgemäßen kationischen Copolymers 2 (Bsp. 8 und 9) auch eine Halbierung der Menge an redispergierbarem Polymerpulver (im Vergleich zum Vergleichsbeispiel 6) ohne negative Auswirkungen auf die Haftzugfestigkeiten. Insbesondere die Haftzugfestigkeiten bei Trockenlagerung und bei Wärmelagerung verschlechtern sich im Gegensatz zum Vergleichsbeispiel 7 nicht. Das Vergleichsbeispiel 6 ist wirtschaftlich

weniger günstig aufgrund der relativ hohen Menge an redispergierbarem Dispersionspulver. Die Klebeoffene Zeit bzw. die Haftzugfestigkeiten nach zwanzig Minuten, sind für die erfindungsgemäßen Beispiele 6 bis 9 im Gegensatz zum Vergleichsbeispiel 7 deutlich verbessert.

## Patentansprüche

**1.** Hydraulisch abbindende Trockenmischung, enthaltend

a) 20 bis 80 Gewichtsprozent eines zementären, hydraulischen Bindemittels,
b) 5 bis 75 Gewichtsprozent anorganische Füllstoffe und / oder organische Füllstoffe,
c) 0,5 bis 10 Gewichtsprozent eines redispergierbaren Polymerpulvers,
d) 0,1 bis 1,5 Gewichtsprozent eines auf Polysaccharidstrukturen basierenden Wasserretentionsmittels,
e) 0,3 bis 4,0 Gewichtsprozent eines Abbindebeschleunigers, ausgewählt aus der Gruppe Calciumformiat, Calciumchlorid, Calciumnitrat
, **dadurch gekennzeichnet, dass** diese entweder
$f_a$) 0,02 bis 2,0 Gewichtsprozent anionisches pulverförmiges, mit Wasser oder Salzlösungen quellbares Copolymer, welches einen extrahierbaren Anteil kleiner als 10 Gew. % aufweist, welcher nach der auf Seite 37 beschriebenen Testmethode zur Bestimmung des extrahierbaren Anteils der superabsorbierenden Copolymere gemessen wird, wobei das Copolymer aufweist

$f_a$-i) 10 bis 60 Molprozent sulfonsäuregruppenhaltige Struktureinheiten der allgemeinen Formel (I)

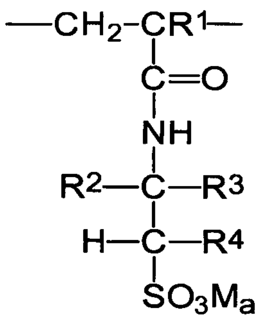

worin

$R^1$ gleich oder verschieden ist und durch Wasserstoff und/oder einen Methylrest repräsentiert wird,
$R^2$, $R^3$, $R^4$ jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,
M gleich oder verschieden ist und durch Wasserstoff, ein ein- oder zweiwertiges Metallkation und/oder ein Ammoniumion repräsentiert wird,
a gleich oder verschieden ist und durch 1/2 und/oder 1 repräsentiert wird,
$f_a$-ii) 30 bis 85 Molprozent (meth)acrylamidogruppenhaltige Struktureinheiten der allgemeinen Formel (II)

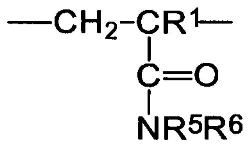

worin

$R^1$ die vorstehend genannte Bedeutung hat,
$R^5$ und $R^6$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis

14 C-Atomen repräsentiert wird,

$f_a$-iii) 0,03 bis 1 Molprozent Struktureinheiten, die sich von Monomerverbindungen ableiten, die mehr als eine radikalisch polymerisierbare, ethylenisch ungesättigte Vinylgruppe aufweisen,

oder alternativ zu $f_a$)

$f_b$) 0,02 bis 2,0 Gewichtsprozent kationisches pulverförmiges, mit Wasser oder Salzlösungen quellbaresCopolymer, welches einen extrahierbaren Anteil kleiner als 10 Gew. % aufweist, welcher nach der auf Seite 37 beschriebenen Testmethode zur Bestimmung des extrahierbaren Anteils der superabsorbierenden Copolymere gemessen wird, wobei das Copolymer aufweist

$f_b$-i) 10 bis 60 Molprozent kationische, ein quaterniertes Stickstoffatom aufweisende Struktureinheiten der allgemeinen Formel (III)

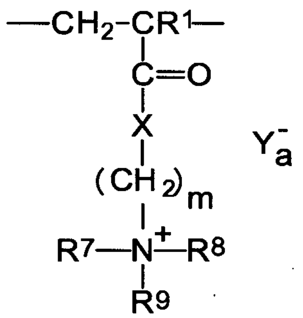

worin

$R^1$ die vorstehend genannte Bedeutung hat,

$R^7$, $R^8$, $R^9$, $R^{10}$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,

m gleich oder verschieden ist und durch eine ganze Zahl von 1 bis 6 repräsentiert wird,

X gleich oder verschieden ist und durch Sauerstoff und/oder N-$R^{10}$ repräsentiert wird,

$Y^-_a$ gleich oder verschieden ist und durch ein Halogenid, $C_1$-bis $C_4$-Alkylsulfat, $C_1$-bis $C_4$-Alkylsulfonat und/oder Sulfat, repräsentiert wird,

a gleich oder verschieden ist und durch 1/2 und/oder 1 repräsentiert wird,

$f_b$-ii) 30 bis 85 Molprozent (meth)acrylamidogruppenhaltige Struktureinheiten der allgemeinen Formel (II)

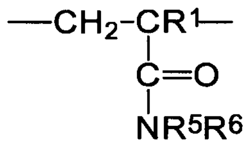

worin

$R^1$ die vorstehend genannte Bedeutung hat,

$R^5$ und $R^6$ jeweils die vorstehend genannten Bedeutungen haben,

$f_b$-iii) 0,03 bis 1 Molprozent Struktureinheiten, die sich von Monomerverbindungen ableiten, die mehr als eine radikalisch polymerisierbare, ethylenisch ungesättigte Vinylgruppe aufweisen,

enthält.

2. Hydraulisch abbindende Trockenmischung nach Anspruch 1, **dadurch gekennzeichnet, dass** das zementäre hydraulische Bindemittel als Portlandzement vorliegt und bevorzugt ausgewählt ist aus den Typen CEM I, II, III, IV und V, und/oder Tonerdezement (Aluminatzement).

3. Hydraulisch abbindende Trockenmischung nach Anspruch 1 oder 2, **dadurch gekennzeichnet, dass** die anorganischen Füllstoffe als Quarzsand und/oder Kalksteinmehl vorliegen oder als Leichtfüllstoffe vorliegen, insbesondere als Mikrohohlkugeln aus Glas, wie Blähglas und/oder als Alumosilikate wie Perlithe und Blähton und/oder als poröser Füllstoff auf natürlicher Basis, wie Mineralschaum, Bims, Schaumlava und Bläh-Vermiculit.

4. Hydraulisch abbindende Trockenmischung nach einem der Ansprüche 1 bis 3, **dadurch gekennzeichnet, dass** das redispergierbare Polymerpulver vorliegt als Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

5. Hydraulisch abbindende Trockenmischung nach einem der Ansprüche 1 bis 4, **dadurch gekennzeichnet, dass** das auf Polysaccharidstrukturen basierende Wasserretentionsmittel als Methylhydroxyethylcellulose und/oder Methylhydroxypropylcellulose vorliegt.

6. Hydraulisch abbindende Trockenmischung nach einem der Ansprüche 1 bis 5, **dadurch gekennzeichnet, dass** die sulfonsäuregruppenhaltigen Struktureinheiten der allgemeinen Formel (I) des anionischen Copolymers sich von 2-Acrylamido-2-methylpropansulfonsäure und/oder deren Salzen ableiten.

7. Hydraulisch abbindende Trockenmischung nach einem der Ansprüche 1 bis 5, **dadurch gekennzeichnet, dass** die kationischen, ein quaterniertes Stickstoffatom aufweisenden Struktureinheiten der allgemeinen Formel (III) des kationischen Copolymers sich ableiten von [3-(Methacryloylamino)-propyl]-trimethylammoniumsalzen und/oder [3-(Acryloylamino)-propyl]-trimethylammoniumsalzen.

8. Hydraulisch abbindende Trockenmischung nach einem der Ansprüche 1 bis 7, **dadurch gekennzeichnet, dass** die (meth)acrylamidogruppenhaltigen Struktureinheiten der allgemeinen Formel (II) sich von Acrylamid, Methacrylamid, Methylacrylamid und/oder N,N-Dimethylacrylamid ableiten.

9. Hydraulisch abbindende Trockenmischung nach einem der Ansprüche 1 bis 8, **dadurch gekennzeichnet, dass** die Struktureinheiten, die sich von Monomerverbindungen mit mehr als einer ethylenisch ungesättigten Vinylverbindung ableiten, sich von Triallylisocyanurat, Triallylamin, N,N'-Methylenbisacrylamid und/oder N,N'-Methylenbismethacrylamid ableiten.

10. Hydraulisch abbindende Trockenmischung nach einem der Ansprüche 1 bis 9, enthaltend

g) 0,1 bis 1,5 Gewichtsprozent eines wasserlöslichen, sulfogruppenhaltigen Copolymers, aufweisend

g-i) 3 bis 96 Molprozent Struktureinheiten der allgemeinen Formel (I)

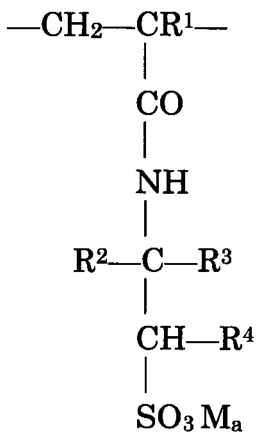

(I)

worin

$R^1$ die vorstehend genannte Bedeutung hat,
$R^2$, $R^3$, $R^4$ jeweils die vorstehend genannten Bedeutungen haben,
M und a die vorstehend genannten Bedeutungen haben,

g-ii) 3 bis 96 Molprozent Struktureinheiten der allgemeinen Formel (II)

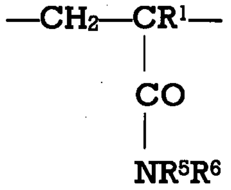

(II)

worin

$R^1$ die vorstehend genannte Bedeutung hat,
$R^5$ und $R^6$ jeweils die vorstehend genannten Bedeutungen haben,

und mindestens eine weitere Struktureinheit ausgewählt aus
g-iii) 0,001 bis 10 Molprozent Struktureinheiten der allgemeinen Formel (IV)

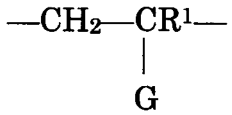

(IV)

worin

$R^1$ die vorstehend genannte Bedeutung hat,
G gleich oder verschieden ist und durch $-COO(C_nH_{2n}O)_p-R^{11}$ und/oder $-(CH_2)_q-O(C_nH_{2n}O)_p-R^{11}$ repräsentiert wird,
$R^{11}$
gleich oder verschieden ist und durch

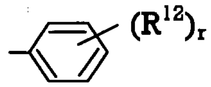

und/oder
einen ungesättigten oder gesättigten, linearen oder verzweigten aliphatischen Alkylrest mit 10 bis 40 C-Atomen repräsentiert wird,
$R^{12}$ gleich oder verschieden ist und durch Wasserstoff, eine $C_1$-bis $C_6$-Alkylgruppe, eine Arylalkylgruppe mit $C_1$- bis $C_{12}$-Alkyl- und $C_6$- bis $C_{14}$-Arylrest repräsentiert wird,
n gleich oder verschieden ist und durch eine ganze Zahl von 2 bis 4 repräsentiert wird,
p gleich oder verschieden ist und durch eine ganze Zahl von 0 bis 200 repräsentiert wird,
q gleich oder verschieden ist und durch eine ganze Zahl von 0 bis 20 repräsentiert wird,
r gleich oder verschieden ist und durch eine ganze Zahl von 0 bis 3 repräsentiert wird,

und
g-iv) 0,1 bis 30 Molprozent der Struktureinheiten der allgemeinen Formel (V)

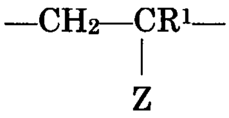

(V)

worin

$R^1$ die vorstehend genannte Bedeutung hat,
Z durch $-(CH_2)_q-O(C_nH_{2n}O)_p-R^{13}$ repräsentiert wird,
n, p und q die vorstehend genannten Bedeutungen haben,
$R^{13}$ gleich oder verschieden ist und durch Wasserstoff und/oder einen $C_1$- bis $C_4$-Alkylrest repräsentiert wird.

**11.** Hydraulisch abbindende Trockenmischung nach einem der Ansprüche 1 bis 10, enthaltend

h) 0,1 bis 1,5 Gewichtsprozent eines wasserlöslichen kationischen Copoymers, aufweisend
h-i) 5 bis 60 Molprozent Struktureinheiten der allgemeinen Formel (VI),

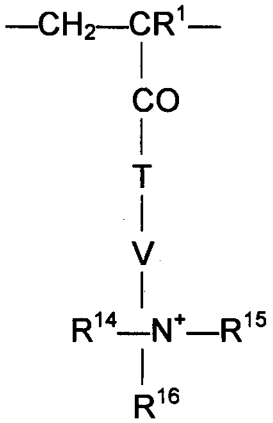

$(W^-)$

(VI)

worin

$R^1$ die vorstehend genannte Bedeutung hat,
$R^{14}$ und $R^{15}$ jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
$R^{16}$ gleich oder verschieden ist und durch einen mit $R^{14}$ oder $R^{15}$ identischen Substituenten, $-(CH_2)_x-SO_3L_a$,

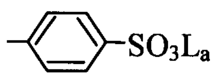

und/oder

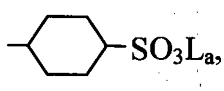

repräsentiert wird,

L gleich oder verschieden ist und durch ein ein- oder zweiwertiges Metallkation, Ammoniumkation und/oder quaternäres Ammoniumkation $(NR_1R_{14}R_{15}R_{16})^+$, repräsentiert wird,
a gleich oder verschieden ist und durch ½ und/oder 1 repräsentiert wird,
T gleich oder verschieden ist und durch Sauerstoff, -NH und/oder $-NR^{14}$, repräsentiert wird, V gleich oder verschieden ist und durch$-(CH_2)_m-$,

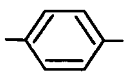 ,

und/oder

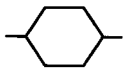

repräsentiert wird,
m gleich oder verschieden ist und durch eine ganze Zahl von 1 bis 6 repräsentiert wird,
$W^-$ gleich oder verschieden ist und durch ein Halogenatom, $C_1$- bis $C_4$-Alkylsulfat und/oder $C_1$- bis $C_4$-Alkylsulfonat, repräsentiert wird,
h-ii) 20 bis 80 Molprozent einer Struktureinheit, welche durch folgende allgemeine Formeln (VIIa) und/oder (VIIb) repräsentiert wird:

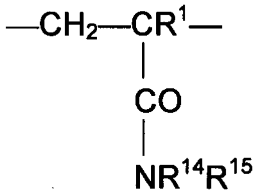

(VIIa)

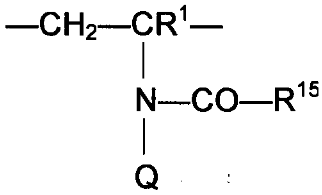

(VIIb)

worin
Q gleich oder verschieden ist und durch Wasserstoff und/oder $-CHR^{14}R^{17}$ repräsentiert wird,
$R^1$, $R^{14}$, $R^{15}$ jeweils mit der Maßgabe die vorstehend genannten Bedeutungen haben, dass im Falle von Q ungleich Wasserstoff $R^{14}$ und $R^{15}$ in der allgemeinen Formel (VIIb) zusammen für eine $-CH_2-(CH_2)_y-$ Methylengruppe stehen können, so dass die allgemeine Formel (VIIb) gemäß folgender Struktur vorliegt:

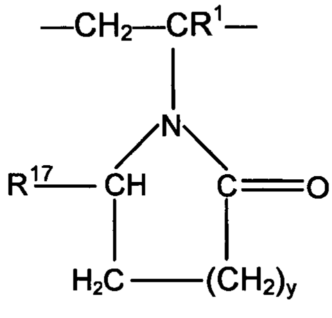

worin
$R^{17}$ gleich oder verschieden sowie repräsentiert durch ein Wasserstoffatom, einen $C_1$- bis $C_4$-Alkylrest, eine Carbonsäuregruppe und/oder eine Carboxylatgruppe $-COOL_a$ ist, wobei y gleich oder verschieden ist und durch eine ganze Zahl von 1 bis 4 repräsentiert wird, sowie L und a jeweils die vorstehend genannten Bedeutungen haben,
h-iii) 0,01 bis 3 Molprozent Struktureinheiten der allgemeinen Formel (VIII)

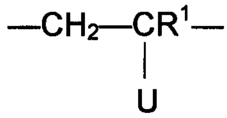

(VIII)

worin
U gleich oder verschieden ist und durch $-COO(C_nH_{2n}O)_s-R^{18}$, und/oder $-(CH_2)_q-O(CnH_2nO)_s-R^{18}$ repräsentiert wird,
n gleich oder verschieden ist und durch eine ganze Zahl zwischen 2 und 4 repräsentiert wird,
s gleich oder verschieden ist und durch eine ganze Zahl zwischen 1 und 200 repräsentiert wird,
q gleich oder verschieden ist und durch eine ganze Zahl zwischen 0 und 20 repräsentiert wird, $R^{18}$ gleich oder verschieden ist und durch tiert wird,

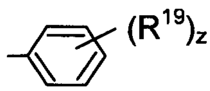

repräsentiert wird,
$R^{19}$ gleich oder verschieden ist und durch Wasserstoff, eine $C_1$- bis $C_6$-Alkylgruppe, und/oder eine Arylalkylgruppe mit $C_1$- bis $C_{12}$-Alkyl-sowie $C_6$- bis $C_{14}$-Arylrest repräsentiert wird,
z gleich oder verschieden ist und durch eine ganze Zahl zwischen 1 und 3 repräsentiert wird und
$R^1$ die vorstehend genannte Bedeutung hat.

**12.** Baustoffmischung, enthaltend eine hydraulisch abbindende Trockenmischung gemäß einem der Ansprüche 1 bis 11 und Wasser.

**13.** Verwendung der Baustoffmischung gemäß Anspruch 12 als Fliesenkleber gemäß DIN EN 12004, als Dichtschlämme, Fugenfüller gemäß EN 13888, Reparaturmörtel gemäß EN 1504, Spachtelmasse, Parkettkleber, Verlaufsmasse, Putz gemäß EN 998-1 und als Klebe-, und Armierungsmörtel für Wärmedämmverbundsysteme (WDVS) gemäß EN 13499 und EN 13500.

## Claims

**1.** Hydraulically setting dry mix comprising

a) from 20 to 80 percent by weight of a cement-containing, hydraulic binder,
b) from 5 to 75 percent by weight of inorganic fillers and/or organic fillers,
c) from 0.5 to 10 percent by weight of a redispersible polymer powder,
d) from 0.1 to 1.5 percent by weight of a water retention agent which is based on polysaccharide structures,
e) from 0.3 to 4.0 percent by weight of a setting accelerator selected from the group consisting of calcium formate, calcium chloride, calcium nitrate, **characterized in that** said dry mix comprises either
$f_a$) from 0.02 to 2.0 percent by weight of anionic pulverulent copolymer which is swellable by means of water or salt solutions and has an extractable fraction of less than 10% by weight measured by the test method described on page 37 for determining the extractable fraction of superabsorbent copolymers, with the copolymer comprising

$f_a$-i) from 10 to 60 molpercent of structural units containing a sulphonic acid group and having the general formula (I)

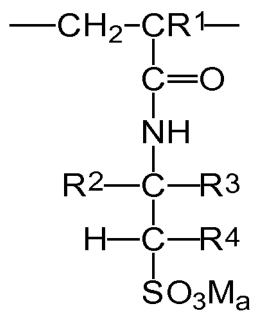

where

the radicals $R^1$
are identical or different and are each hydrogen or a methyl radical,
the radicals $R^2$, $R^3$, $R^4$
are in each case identical or different and are each, independently of one another, hydrogen, an aliphatic, branched or unbranched hydrocarbon radical having from 1 to 6 carbon atoms or an aromatic hydrocarbon radical having from 6 to 14 carbon atoms,
the ions M
are identical or different and are each hydrogen, a monovalent or divalent metal cation or an ammonium ion,
the indices a
are identical or different and are each either 1/2 or 1,

$f_a$-ii) from 30 to 85 molpercent of structural units containing a (meth)acrylamido group and having the general formula (II)

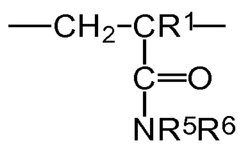

where

$R^1$ is as defined above,
the radicals $R^5$ and $R^6$
are in each case identical or different and are each, independently of one another, hydrogen, a branched or unbranched aliphatic hydrocarbon radical having from 1 to 20 carbon atoms, a cycloaliphatic hydrocarbon radical having from 5 to 8 carbon atoms or an aryl radical having from 6 to 14 carbon atoms,

$f_a$-iii) from 0.03 to 1 molpercent of structural units derived from monomer compounds which have more than one freeradically polymerizable, ethylenically unsaturated vinyl group,
or, as an alternative to $f_a$),

$f_b$) from 0.02 to 2.0 percent by weight of a cationic pulverulent copolymer which is swellable by means of water or salt solutions and has an extractable fraction of less than 10% by weight measured by the test method described on page 37 for determining the extractable fraction of superabsorbent copolymers, with the copolymer comprising

$f_b$-i) from 10 to 60 molpercent of cationic units containing a quaternized nitrogen atom and having the general formula (III)

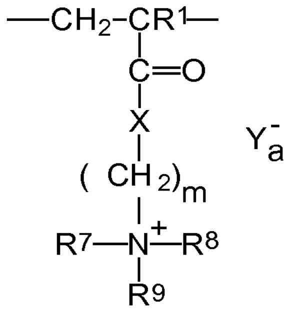

where

$R^1$ is as defined above,
the radicals $R^7$, $R^8$, $R^9$, $R^{10}$
are in each case identical or different and are each, independently of one another, hydrogen, a branched or unbranched aliphatic hydrocarbon radical having from 1 to 20 carbon atoms, a cycloaliphatic hydrocarbon radical having from 5 to 8 carbon atoms or an aryl radical having from 6 to 14 carbon atoms,
the indices m
are identical or different and are each an integer from 1 to 6,
the radicals X
are identical or different and are each oxygen or N-$R^{10}$,
the ions $Y^-_a$
are identical or different and are each a halide, $C_1$-$C_4$-alkylsulphate, $C_1$-$C_4$-alkylsulphonate or sulphate,
the indices a
are identical or different and are each either 1/2 or 1,

$f_b$-ii) from 30 to 85 molpercent of structural units containing a (meth)acrylamido group and having the general formula (II)

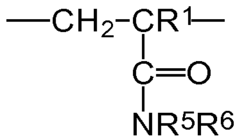

where

$R^1$ is as defined above,
$R^5$ and $R^6$
are each as defined above,

$f_b$-iii) from 0.03 to 1 molpercent of structural units derived from monomer compounds which have more than one free-radically polymerizable, ethylenically unsaturated vinyl group.

**2.** Hydraulically setting dry mix according to Claim 1, **characterized in that** the cement-containing hydraulic binder is present as portland cement and is preferably selected from among the types CEM I, II, III, IV und V and/or alumina cement (aluminate cement).

**3.** Hydraulically setting dry mix according to Claim 1 or 2, **characterized in that** the inorganic fillers are present as silica sand and/or ground limestone or are present as lightweight fillers, in particular as hollow glass microspheres such as foamed glass and as aluminosilicates such as pearlites and expanded clay, and/or as natural porous fillers such as mineral foam, pumice, foamed lava and expanded vermiculite.

**4.** Hydraulically setting dry mix according to any of Claims 1 to 3, **characterized in that** the redispersible polymer powder is present as vinyl acetate polymer, vinyl acetate-ethylene copolymer, vinyl acetate-vinyl ester copolymer and/or vinyl acetate-vinyl ester-ethylene copolymer, with the vinyl ester monomers being selected in each case from the group consisting of vinyl laurate, vinyl pivalate and vinyl versatates, also as vinyl acetate-acrylic ester copolymer,

vinyl acetate-acrylic ester-ethylene copolymer, styrene-butadiene copolymer and styrene-acrylic ester copolymer, with the acrylic esters in each case being esters with branched or unbranched alcohols having from 1 to 10 carbon atoms.

**5.** Hydraulically setting dry mix according to any of Claims 1 to 4, **characterized in that** the water retention agent based on polysaccharide structures is present as methylhydroxyethylcellulose and/or methylhydroxypropylcellulose.

**6.** Hydraulically setting dry mix according to any of Claims 1 to 5, **characterized in that** the structural units containing a sulphonic acid group and having the general formula (I) in the anionic copolymer are derived from 2-acrylamido-2-methylpropanesulphonic acid and/or its salts.

**7.** Hydraulically setting dry mix according to any of Claims 1 to 5, **characterized in that** the cationic structural units containing a quaternary nitrogen atom and having the general formula (III) in the cationic copolymer are derived from [3-(methacryloylamino)propyl]trimethylammonium salts and/or [3-(acryloylamino)propyl]trimethylammonium salts.

**8.** Hydraulically setting dry mix according to any of Claims 1 to 7, **characterized in that** the structural units containing a (meth)acrylamido group and having the general formula (II) are derived from acrylamide, methacrylamide, methylacrylamide and/or N,N-dimethylacrylamide.

**9.** Hydraulically setting dry mix according to any of Claims 1 to 8, **characterized in that** the structural units derived from monomer compounds having more than one ethylenically unsaturated vinyl group are derived from triallylisocyanurate, triallylamine, N,N'-methylenebisacrylamide and/or N,N'-methylenebis-methacrylamide.

**10.** Hydraulically setting dry mix according to any of Claims 1 to 9 comprising

g) from 0.1 to 1.5 percent by weight of a watersoluble copolymer which contains sulpho groups and comprises

g-i) from 3 to 96 molpercent of structural units of the general formula (I)

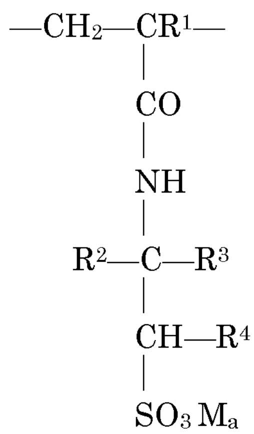

(I)

where

$R^1$ is as defined above,
$R^2$, $R^3$, $R^4$ are each as defined above,
M and a are as defined above,

g-ii) from 3 to 96 molpercent of structural units of the general formula (II)

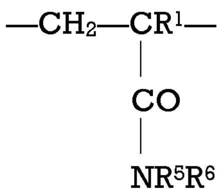

(II)

where

$R^1$ is as defined above,
$R^5$ and $R^6$ are each as defined above,
and at least one further structural unit selected from among

g-iii) from 0.001 to 10 molpercent of structural units of the general formula (IV)

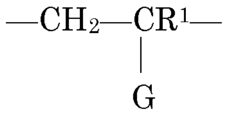

(IV)

where

$R^1$ is as defined above,
the radicals
G are identical or different and are each -COO $(C_nH_{2n}O)_p$-$R^{11}$ or -$(CH_2)_q$-O$(C_nH_2n_O)_p$-$R^{11}$,
the radicals
$R^{11}$ are identical or different

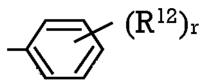

and are each
or an unsaturated or saturated, linear or branched aliphatic alkyl radical having from 10 to 40 carbon atoms,
the radicals
$R^{12}$ are identical or different and are each hydrogen, a $C_1$-$C_6$-alkyl group, an arylalkyl group having a $C_1$-$C_{12}$-alkyl radical and a $C_6$-$C_{14}$-aryl radical,
the indices
n are identical or different and are each an integer from 2 to 4,
the indices
p are identical or different and are each an integer from 0 to 200,
the indices
q are identical or different and are
each an integer from 0 to 20,
the indices
r are identical or different and are each an integer from 0 to 3,
and

g-iv) from 0.1 to 30 molpercent of structural units of the general formula (V)

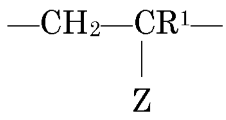

(V)

where

$R^1$ is as defined above,
Z is-$(CH_2)_q$-$O(C_nH_2nO)_p$-$R^{13}$, n, p and q are as defined above, the radicals
$R^{13}$ are identical or different and are each hydrogen or a $C_1$-$C_4$-alkyl radical.

**11.** Hydraulically setting dry mix according to any of Claims 1 to 10 comprising

h) from 0.1 to 1.5 percent by weight of a watersoluble cationic copolymer comprising

h-i) from 5 to 60 molpercent of structural units of the general formula (VI),

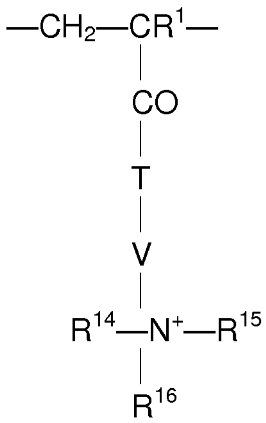

($W^-$)

(VI)

where

$R^1$ is as defined above,
$R^{14}$ and $R^{15}$ are in each case identical or different
and are each, independently of one another, hydrogen, an aliphatic hydrocarbon radical having from 1 to 20 carbon atoms, a cycloaliphatic hydrocarbon radical having from 5 to 8 carbon atoms and/or an aryl radical having from 6 to 14 carbon atoms,
the radicals
$R^{16}$ are identical or different and are each a substituent

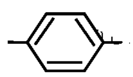

tical to

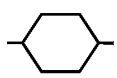

or $R^{15}$, -$(CH_2)_x$-$SO_3L_a$, $SO_3L_a$ or $SO_3L_a$, the ions

L are identical or different and are each a monovalent or divalent metal cation, ammonium cation or quaternary ammonium cation $(NR_1R_{14}R_{15}R_{16})^+$,
the indices a are identical or different and are each ½ or 1,
the radicals
T are identical or different and are each oxygen, -NH and/or $-NR^{14}$,
the radicals
V are identical or different and each $(CH_2)_m^-$,

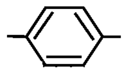

or

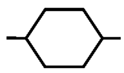

,

the indices
m are identical or different and are each an integer from 1 to 6,
the ions
$W^-$ are identical or different and are each a halogen atom, $C_1$-$C_4$-alkylsulphate or $C_1$-$C_4$-alkylsulphonate,

h-ii) from 20 to 80 molpercent of a structural unit having the general formulae (VIIa) and/or (VIIb):

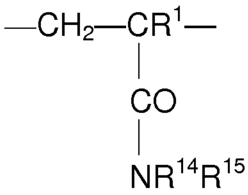

(VIIa)

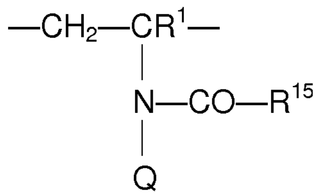

(VIIb)

where
the radicals

Q are identical or different and are each hydrogen or $-CHR^{14}R^{17}$,
$R^1$, $R^{14}$, $R^{15}$ are each as defined above, with the proviso that when Q is not hydrogen then $R^{14}$ and $R^{15}$ in the general formula (VIIb) can together form a $-CH_2-(CH_2)_y-$ methylene group so that the general formula (VIIb) represents the following structure:

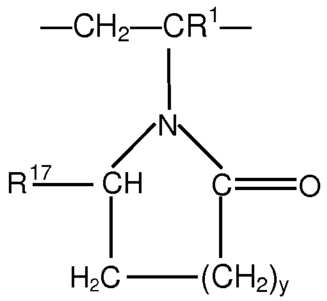

where
the radicals
$R^{17}$ are identical or different and are each a hydrogen atom, a $C_1$-$C_4$-alkyl radical, a carboxylic acid

group or a carboxylate group $-COOL_a$, where the indices y are identical or different and are each an integer from 1 to 4, and L and a are each as defined above,

h-iii) from 0.01 to 3 molpercent of structural units of the general formula (VIII)

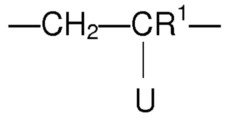

(VIII)

where
the radicals

U are identical or different and are each-COO $(CnH_2nO)_s$-$R^{18}$ or-$(CH_2)_q$-$O(C_nH_{2n}O)_s$-$R^{18}$,
the indices
n are identical or different and are each an integer from 2 to 4,
the indices
s are identical or different and are each an integer from 1 to 200,
the indices
q are identical or different and are each an integer from 0 to 20,
the radicals
$R^{18}$ are identical or different and are each

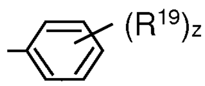

,

the radicals
$R^{19}$ are identical or different and are each hydrogen, a $C_1$-$C_6$-alkyl group or an arylalkyl group having a $C_1$-$C_{12}$-alkyl radical and a $C_6$-$C_{14}$-aryl radical,
the indices
z are identical or different and are each an integer from 1 to 3 and
$R^1$ is as defined above.

**12.** Building material mix comprising a hydraulically setting dry mix according to any of Claims 1 to 11 and water.

**13.** Use of the building material mix according to Claim 12 as tile adhesive in accordance with DIN EN 12004, as sealing slurry, joint filler in accordance with EN 13888, repair mortar in accordance with EN 1504, knifing filler, parquet adhesive, screed, plaster or render in accordance with EN 998-1 and as adhesive mortar or reinforcing mortar for composite thermal insulation systems (CTIS) in accordance with EN 13499 and EN 13500.

## Revendications

**1.** Mélange sec à prise hydraulique, contenant

a) 20 à 80% en poids d'un liant hydraulique, à base de ciment,
b) 5 à 75% en poids de charges inorganiques et/ou de charges organiques,
c) 0,5 à 10% en poids d'une poudre polymère redispersible,
d) 0,1 à 1,5% en poids d'un agent de rétention d'eau à base de structures de type polysaccharide,
e) 0,3 à 4,0% en poids d'un accélérateur de prise choisi dans le groupe formé par le formiate de calcium, le chlorure de calcium, le nitrate de calcium,
**caractérisé en ce qu'**il contient soit
$f_a$) 0,02 à 2,0% en poids d'un copolymère anionique sous forme de poudre, gonflable par de l'eau ou des solutions de sel, qui présente une proportion pouvant être extraite inférieure à 10% en poids, qui est mesurée selon le procédé de test décrit à la page 37 pour la détermination de la proportion pouvant être extraite des copolymères superabsorbants, le copolymère présentant

$f_a$-i) 10 à 60% en mole d'unités structurales contenant des groupes acide sulfonique de formule générale (I)

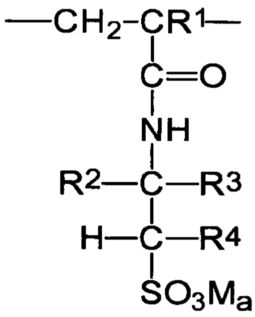

dans laquelle

$R^1$ est identique ou différent et représente hydrogène et/ou un radical méthyle,
$R^2$, $R^3$, $R^4$ sont à chaque fois identiques ou différents et représentent, indépendamment les uns des autres, à chaque fois hydrogène, un radical hydrocarboné aliphatique, ramifié ou non ramifié, comprenant 1 à 6 atomes de carbone et/ou un radical hydrocarboné aromatique comprenant 6 à 14 atomes de carbone,
M est identique ou différent et représente hydrogène, un cation métallique monovalent ou divalent et/ou un ion d'ammonium,
a est identique ou différent et représente 1/2 et/ou 1,

$f_a$-ii) 30 à 85% en mole d'unités structurales contenant des groupes (méth)acrylamido de formule générale (II)

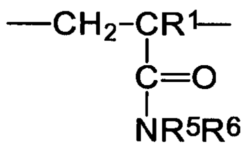

dans laquelle

$R^1$ présente la signification susmentionnée,
$R^5$ et $R^6$ sont à chaque fois identiques ou différents et représentent, indépendamment l'un de l'autre, à chaque fois hydrogène, un radical hydrocarboné aliphatique, ramifié ou non ramifié, comprenant 1 à 20 atomes de carbone, un radical hydrocarboné cycloaliphatique comprenant 5 à 8 atomes de carbone et/ou un radical aryle comprenant 6 à 14 atomes de carbone,
$f_a$-iii) 0,03 à 1% en mole d'unités structurales qui sont dérivées de composés monomères qui présentent plus d'un groupe vinyle éthyléniquement insaturé, polymérisable par voie radicalaire, soit, en variante par rapport à $f_a$)
$f_b$) 0,02 à 2,0% en poids d'un copolymère cationique sous forme de poudre, gonflable par de l'eau ou des solutions de sel, qui présente une proportion pouvant être extraite inférieure à 10% en poids, qui est mesurée selon le procédé de test décrit à la page 37 pour la détermination de la proportion pouvant être extraite des copolymères superabsorbants, le copolymère présentant $f_b$-i) 10 à 60% en mole d'unités structurales cationiques, présentant un atome d'azote quaternaire, de formule générale (III)

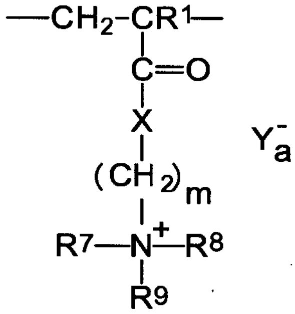

dans laquelle

$R^1$ présente la signification susmentionnée,
$R^7$, $R^8$, $R^9$, $R^{10}$ sont à chaque fois identiques ou différents et représentent, indépendamment les uns des autres, à chaque fois hydrogène, un radical hydrocarboné aliphatique, ramifié ou non ramifié, comprenant 1 à 20 atomes de carbone, un radical hydrocarboné cycloaliphatique comprenant 5 à 8 atomes de carbone et/ou un radical aryle comprenant 6 à 14 atomes de carbone,
m est identique ou différent et représente un nombre entier de 1 à 6 ;
X est identique ou différent et représente oxygène et/ou N-$R^{10}$,
$Y^-_a$ est identique ou différent et représente halogénure, $C_1$-$C_4$-alkylsulfate, $C_1$-$C_4$-alkylsulfonate et/ou sulfate,
a est identique ou différent et représente 1/2 et/ou 1,
$f_b$-ii) 30 à 85% en mole d'unités structurales contenant des groupes (méth)acrylamido de formule générale (II)

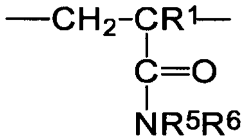

dans laquelle
$R^1$ présente la signification susmentionnée,
$R^5$ et $R^6$ présentent à chaque fois les significations susmentionnées,
$f_b$-iii) 0,03 à 1% en mole d'unités structurales qui sont dérivées de composés monomères qui présentent plus d'un groupe vinyle éthyléniquement insaturé, polymérisable par voie radicalaire.

2. Mélange sec à prise hydraulique selon la revendication 1, **caractérisé en ce que** le liant hydraulique à base de ciment se trouve sous forme de ciment Portland et est de préférence choisi parmi les types CEM I, II, III, IV et V et/ou de ciment fondu (ciment alumineux).

3. Mélange sec à prise hydraulique selon la revendication 1 ou 2, **caractérisé en ce que** les charges inorganiques se trouvent sous forme de sable de quartz et/ou de farine de calcaire ou sous forme de charges légères, en particulier sous forme de microbilles creuses en verre, telles que le verre expansé, et/ou sous forme d'aluminosilicates, tels que la perlite et l'argile expansée, et/ou sous forme de charge poreuse d'origine naturelle, telle que la mousse minérale, la pierre ponce, la lave mousseuse et la vermiculite expansée.

4. Mélange sec à prise hydraulique selon l'une quelconque des revendications 1 à 3, **caractérisé en ce que** la poudre polymère redispersible se trouve sous forme de polymère d'acétate de vinyle, de copolymère d'acétate de vinyle-éthylène, de copolymère d'acétate de vinyle-ester de vinyle et/ou de copolymère d'acétate de vinyle-ester de vinyle-éthylène, les monomères d'ester de vinyle étant à chaque fois choisis dans le groupe formé par le laurate de vinyle, le pivalate de vinyle et le versatate de vinyle, en outre sous forme de copolymère d'acétate de vinyle-ester d'acide acrylique, de copolymère d'acétate de vinyle-ester d'acide acrylique-éthylène, de copolymère de styrène-butadiène et de copolymère de styrène-ester d'acide acrylique, les esters d'acide acrylique étant à chaque fois des esters avec des alcools ramifiés ou non ramifiés comprenant 1 à 10 atomes de carbone.

5. Mélange sec à prise hydraulique selon l'une quelconque des revendications 1 à 4, **caractérisé en ce que** l'agent

de rétention d'eau à base de structures de type polysaccharide se trouve sous forme de méthylhydroxyéthylcellulose et/ou de méthylhydroxypropylcellulose.

6. Mélange sec à prise hydraulique selon l'une quelconque des revendications 1 à 5, **caractérisé en ce que** les unités structurales cationiques contenant des groupes acide sulfonique de formule générale (I) du copolymère anionique sont dérivées de l'acide 2-acrylamido-2-méthylpropanesulfonique et/ou de ses sels.

7. Mélange sec à prise hydraulique selon l'une quelconque des revendications 1 à 5, **caractérisé en ce que** les unités structurales cationiques présentant un atome d'azote quaternaire de formule générale (III) du copolymère cationique sont dérivées de sels de [3-(méthacryloylamino)-propyl]-triméthylammonium et/ou de sels de [3-(acryloylamino)-propyl]-triméthylammonium.

8. Mélange sec à prise hydraulique selon l'une quelconque des revendications 1 à 7, **caractérisé en ce que** les unités structurales contenant des groupes (méth)acrylamido de formule générale (II) sont dérivées de l'acrylamide, du méthacrylamide, du méthylacrylamide et/ou du N,N-diméthylacrylamide.

9. Mélange sec à prise hydraulique selon l'une quelconque des revendications 1 à 8, **caractérisé en ce que** les unités structurales, qui sont dérivées de composés monomères présentant plus d'un composé de vinyle éthyléniquement insaturé, sont dérivées de l'isocyanurate de triallyle, de la triallylamine, du N,N'-méthylènebisacrylamide et/ou du N,N'-méthylènebisméthacrylamide.

10. Mélange sec à prise hydraulique selon l'une quelconque des revendications 1 à 9, contenant g) 0,1 à 1,5% en poids d'un copolymère soluble dans l'eau, contenant des groupes sulfo, présentant g-i) 3 à 96% en mole d'unités structurales de formule générale (I)

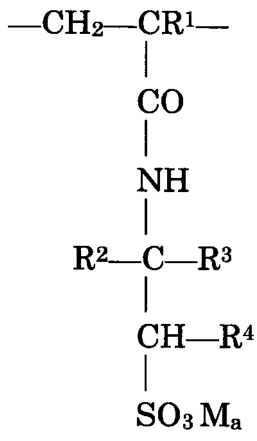

(I)

dans laquelle

$R^1$ présente la signification susmentionnée,
$R^2$, $R^3$, $R^4$ présentent à chaque fois les significations susmentionnées,
M et a présentent les significations susmentionnées,
g-ii) 3 à 96% en mole d'unités structurales de formule générale (II)

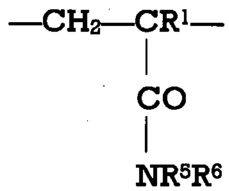

(II)

dans laquelle
$R^1$ présente la signification susmentionnée,
$R^5$ et $R^6$ présentent à chaque fois les significations susmentionnées, et au moins une autre unité structurale choisie parmi
g-iii) 0,001 à 10% en mole d'unités structurales de formule générale (IV)

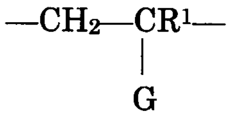
(IV)

dans laquelle
$R^1$ présente la signification susmentionnée,
G est identique ou différent et représente $-COO(C_nH_{2n}O)_p-R^{11}$ et/ou $-(CH_2)_q-O(C_nH_{2n}O)_p-R^{11}$,
$R^{11}$ est identique ou différent et représente

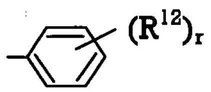

et/ou un radical alkyle aliphatique insaturé ou saturé, linéaire ou ramifié comprenant 10 à 40 atomes de carbone,
$R^{12}$ est identique ou différent et représente hydrogène, un groupe $C_1$-$C_6$-alkyle, un groupe arylalkyle comprenant un radical $C_1$-$C_{12}$-alkyle et un radical $C_6$-$C_{14}$-aryle,
n est identique ou différent et représente un nombre entier de 2 à 4 ;
p est identique ou différent et représente un nombre entier de 0 à 200 ;
q est identique ou différent et représente un nombre entier de 0 à 20 ;
r est identique ou différent et représente un nombre entier de 0 à 3,

et

g-iv) 0,1 à 30% en mole d'unités structurales de formule générale (V)

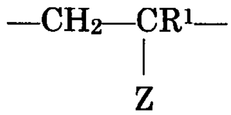

(V)

dans laquelle

$R^1$ présente la signification susmentionnée,
Z représente - $(CH_2)_q-O(C_nH_{2n}O)_p-R^{13}$,
n, p et q présentent les significations susmentionnées,
$R^{13}$ est identique ou différent et représente hydrogène et/ou un radical $C_1$-$C_4$-alkyle.

**11.** Mélange sec à prise hydraulique selon l'une quelconque des revendications 1 à 10, contenant h) 0,1 à 1,5% en poids d'un copolymère cationique soluble dans l'eau, présentant

h-i) 5 à 60% en mole d'unités structurales de formule générale (VI)

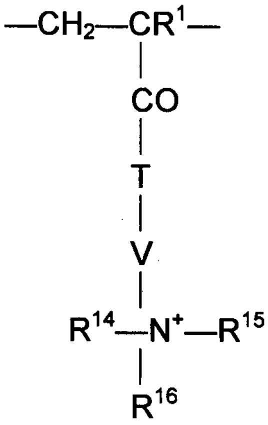

(W$^-$)

(VI)

dans laquelle

$R^1$ présente la signification susmentionnée,
$R^{14}$ et $R^{15}$ sont à chaque fois identiques ou différents et représentent, indépendamment l'un de l'autre, à chaque fois hydrogène, un radical hydrocarboné aliphatique, comprenant 1 à 20 atomes de carbone, un radical hydrocarboné cycloaliphatique comprenant 5 à 8 atomes de carbone et/ou un radical aryle comprenant 6 à 14 atomes de carbone,
$R^{16}$ est identique ou différent et représente un substituant identique à $R^{14}$ ou à $R^{15}$, $-(CH_2)_x-SO_3La$,

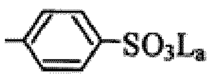

et/ou

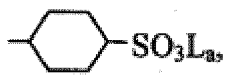

L est identique ou différent et représente un cation métallique monovalent ou divalent, un cation d'ammonium et/ou un cation d'ammonium quaternaire $(NR_1R_{14}R_{15}R_{16})^+$,
a est identique ou différent et représente 1/2 et/ou 1,
T est identique ou différent et représente oxygène, -NH et/ou $-NR^{14}$,
V est identique ou différent et représente$-(CH_2)_m-$

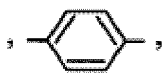

et/ou

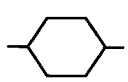

m est identique ou différent et représente un nombre entier de 1 à 6 ;
$W^-$ est identique ou différent et représente un atome d'halogène, $C_1$-$C_4$-alkylsulfate et/ou $C_1$-$C_4$-alkylsulfonate,
h-ii) 20 à 80% en mole d'une unité structurale, qui est représentée par les formules générales (VIIa) et/ou

(VIIb) suivantes:

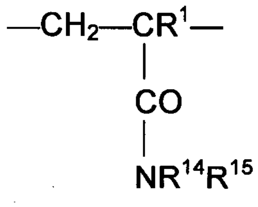

(VIIa)

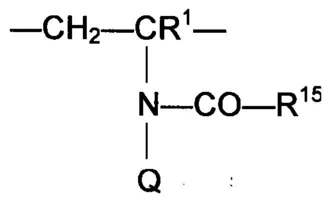

(VIIb)

dans lesquelles

Q est identique ou différent et représente hydrogène et/ou $-CHR^{14}R^{17}$,
$R^1$, $R^{14}$, $R^{15}$ présentent à chaque fois les significations susmentionnées, à condition que, si Q est différent d'hydrogène, $R^{14}$ et $R^{15}$ dans la formule générale (VIIb) peuvent représenter ensemble un groupe $-CH_2-(CH_2)_y$-méthylène, de telle sorte qu'on obtient la formule générale (VIIb) suivante:

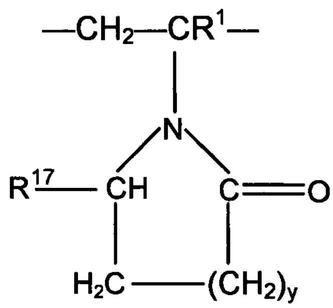

dans laquelle
$R^{17}$ est identique ou différent et représente un atome d'hydrogène, un radical $C_1$-$C_4$-alkyle, un groupe acide carboxylique et/ou un groupe carboxylate $-COOL_a$, y étant identique ou différent et représentant un nombre entier de 1 à 4, et L et a présentent à chaque fois les significations susmentionnées,

h-iii) 0,01 à 3% en mole d'unités structurales de formule générale (VIII)

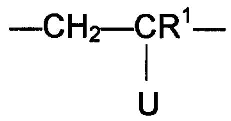

(VIII)

dans laquelle

U est identique ou différent et représente $-COO(C_nH_{2n}O)_s-R^{18}$ et/ou $-(CH_2)_q-O(C_nH_{2n}O)_s-R^{18}$,
n est identique ou différent et représente un nombre entier entre 2 et 4,
s est identique ou différent et représente un nombre entier entre 1 et 200,
q est identique ou différent et représente un nombre entier entre 0 et 20,
$R^{18}$ est identique ou différent et représente

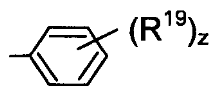

$R^{19}$ est identique ou différent et représente hydrogène, un groupe $C_1$-$C_6$-alkyle et/ou un groupe arylalkyle comprenant un radical $C_1$-$C_{12}$-alkyle et un radical $C_6$-$C_{14}$-aryle,
z est identique ou différent et représente un nombre entier entre 1 et 3,
$R^1$ présente la signification susmentionnée.

**12.** Mélange de matériau de construction, contenant un mélange sec à prise hydraulique selon l'une quelconque des revendications 1 à 11 et de l'eau.

**13.** Utilisation du mélange de matériau de construction selon la revendication 12 comme colle à carrelage selon la norme DIN EN 12004, comme mortier d'étanchéité, comme mortier de jointoiement selon la norme EN 13888, comme mortier de réparation selon la norme EN 1504, comme masse de bouchage, colle à parquet, masse d'étalement, enduit selon la norme EN 998-1 et comme mortier-colle et mortier d'armature pour systèmes composites d'isolation thermique (ETICS) selon les normes EN 13499 et EN 13500.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2003144386 A
- US 6187887 B
- WO 2007017286 A
- EP 1686103 A
- US 4857610 A


### In der Beschreibung aufgeführte Nicht-Patentliteratur


- **R. BAYER ; H. LUTZ ; DRY MORTARS.** Ullmann's Encyclopedia of Industrial Chemistry. Wiley-VCH, 2003, vol. 11, 83-108
- **F. BUCHHOLZ ; A. GRAHAM.** Modern Superabsorber Technology. John Wiley & Sons Inc, 1989, 55-67